# EUROPEAN PATENT SPECIFICATION

(11) **EP 3 306 872 B1**
(45) Date of publication and mention of the grant of the patent: **29.04.2020**
(21) Application number: 15901507.2
(22) Date of filing: 20.08.2015
(51) Int. Cl.: H04B 10/2575, H04L 12/751, H04J 14/02, H04B 10/077, H04W 24/06, H04W 24/10

(54) **METHOD AND APPARATUS FOR EXPLORING FRONTHAUL TOPOLOGY**
VERFAHREN UND VORRICHTUNG ZUR ERKUNDUNG DER FRONTHAUL-TOPOLOGIE
PROCÉDÉ ET APPAREIL D'EXPLORATION DE TOPOLOGIE FRONTHAUL

(43) Date of publication of application: 11.04.2018
(73) Proprietor: Huawei Technologies Co., Ltd., Longgang Shenzhen, Guangdong 518129 (CN)
(72) Inventor: ZHU, Jian, Shenzhen Guangdong 518129 (CN); BAO, Shenghua, Shenzhen Guangdong 518129 (CN); LI, Changnian, Shenzhen Guangdong 518129 (CN); YANG, Yicheng, Shenzhen Guangdong 518129 (CN); TAN, Jingxin, Shenzhen Guangdong 518129 (CN)
(74) Representative: Goddar, Heinz J.
(86) International application number: PCT/CN2015/087644
(87) International publication number: WO 2017/028303

(56) References cited:
- EP-A1- 2 860 908
- WO-A1-2007/121681
- CN-A- 101 018 180
- CN-A- 102 217 378
- CN-A- 102 255 775
- CN-A- 103 828 310
- GOMES NATHAN J ET AL: "Fronthaul evolution: From CPRI to Ethernet", OPTICAL FIBER TECHNOLOGY, vol. 26, 15 August 2015 (2015-08-15), pages 50-58, XP029297162, ISSN: 1068-5200, DOI: 10.1016/J.YOFTE.2015.07.009

## Description

### TECHNICAL FIELD

Embodiments of the present invention relate to the communications field, and in particular, to a method and an apparatus for probing a fronthaul topology.

### BACKGROUND

Currently, a remote radio unit (Remote Radio Unit, "RRU" for short, or Radio Head, "RH" for short) and a baseband unit (Base Band Unit, "BBU" for short) that are of a distributed base station are usually physically connected by using an optical fiber or a cable, and the Common Public Radio Interface (Common Public Radio Interface, "CPRI" for short) protocol is used in terms of a service. BBUs disposed at remote locations are centrally deployed in a centralized equipment room and are connected to radio frequency units by using optical fibers. A distance between a BBU and a radio frequency unit may be extended by several kilometers or even tens of kilometers. This manner is referred to as clean, centralized processing, collaborative radio, and real-time cloud radio access network (Clean, Centralized processing, Collaborative radio, and real-time Cloud Radio Access Network, "CRAN" for short). Therefore, a demand for equipment rooms is reduced, and network deployment can be easily and quickly performed.

To use installed optical fibers of an operator, and reduce overall costs of CRAN deployment, the operator introduces an optical transmission device (usually an OTN device) in fronthaul (Fronthaul), and reuses existing optical fibers to a station, so as to reduce the overall costs. Optical transmission devices are usually deployed in pairs, that is, one optical transmission device is deployed on a station side, and one optical transmission device is correspondingly deployed in a central equipment room.

Before the transmission device is introduced, a path between a radio frequency unit and a baseband unit is as follows: the radio frequency unit->an optical module of the radio frequency unit->an optical fiber->an optical module of the baseband unit->the baseband unit. When a communication fault occurs, a fault location needs to be determined, and a fault locating means such as remote stage-by-stage soft loopback (a command control device is used to form loopback) is usually used. Before these operations are performed, a connection relationship between loopback points needs to be known.

Because the transmission device is introduced, a path between a wireless device and the transmission device becomes as follows: a radio frequency unit->an optical module of the radio frequency unit->an optical module that is on a radio frequency side and that is of a field transmission device->the field transmission device->an optical module that is on a baseband side and that is of the field transmission device->an optical fiber->an optical module that is on a radio frequency side and that is of a transmission device in an equipment room->a transmission device in the equipment room->an optical module that is on a baseband side and that is of the transmission device in the equipment room->an optical module of a baseband unit->the baseband unit. Likewise, to locate a fault, an accurate connection relationship among the radio frequency unit, the field transmission device, the transmission device in the equipment room, and the baseband unit needs to be known.

A port connection relationship that is between a transport network device and a wireless device and that is obtained from an operation and maintenance platform on a wireless or transmission side is actually one type of fronthaul topology information. Currently, neither a radio access network nor a transport network has a capability to represent a complete topology of interfaces of a baseband device and a radio frequency device. If a prior art is used, the problem can be resolved only by using construction drawings. However, the construction drawings cannot be electronized, consultation efficiency is extremely low, and the construction drawings may be easily lost and cannot be updated in time. Consequently, when a loopback operation needs to be performed on a radio frequency device, even a transport network port at a peer end is unknown. Likewise, when an operation needs to be performed on a transport network port, a specific radio frequency device or baseband device that is connected to the transport network port is also unknown.

In addition, if configuration is added on a radio access network side or a transport network side to statically represent a topology connection relationship, a connection relationship between a port of a baseband device and a port of a transport network device needs to be configured. An existing problem lies in that a system of the wireless device and a system of the transport network device need to be coupled. Actually, this configuration is difficult to be performed, and it is difficult to continuously ensure correctness of the configuration. Because data configuration is usually separately performed for the transport network device and the wireless device, cooperation of data configuration personnel definitely significantly increases difficulty in device maintenance.

Static configuration data of a topology connection relationship needs to be continuously maintained according to a change of a network, while adjustment in the network may occur at any time, and both a wireless device and a transmission device may be frequently adjusted. In continuous configuration and maintenance operations, any oversight may cause inconsistency in an actual topology and configuration data. More importantly, correctness of configured connection information cannot be checked by a device. This means that it is difficult to identify an error, and finally, a network fault may occur.

EP 2 860 908 A1 discloses a method of WSS topology discovery initiated and performed by a control node in which a probing wavelength signal is sent from a discovery unit of a control node to a first WSS, wherein said wavelength is looped back via a second WSS and detected at a receiving end of the control node.

The document with title "Fronthaul evolution: from CPRI to Ethernet", XP29297162, provides information about probe-based monitoring of the fronthaul between BBU /RRHs.

### SUMMARY

The present invention is defined by the independent claims 1, 6 and 11 to which reference should now be made. Specific embodiments are defined by the dependent claims. Embodiments of the present invention provide a method and an apparatus for probing a fronthaul topology, so as to accurately obtain information about a topology between a wireless device and a transport network device.

According to a first aspect, a method for probing a fronthaul topology is provided, and the method includes: sending, by a baseband device, a source route probe frame to a first transport network device in a transport network, where the source route probe frame is sent to a radio frequency device by using the transport network; receiving, by the baseband device, a destination route probe frame sent by the first transport network device, where the destination route probe frame is formed after the first transport network device records first port information in the source route probe frame and a second transport network device in the transport network records second port information in the source route probe frame, the first port information indicates an input port that is of the first transport network device and that is connected to a target port of the baseband device, and the second port information indicates an output port that is of the second transport network device and that is connected to a receive port of the radio frequency device; determining, by the baseband device, probe information according to the destination route probe frame, where the probe information indicates that the target port of the baseband device is connected to the input port of the first transport network device, and that the output port of the second transport network device is connected to the receive port of the radio frequency device; and sending, by the baseband device, the probe information to an element management system EMS.

With reference to the first aspect, in an implementation of the first aspect, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device; and the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

With reference to the first aspect and the foregoing implementation of the first aspect, in another implementation of the first aspect, the probe information includes port information of the baseband device, the first port information, and the second port information, and the port information of the baseband device indicates the target port of the baseband device.

With reference to the first aspect and the foregoing implementations of the first aspect, in another implementation of the first aspect, the probe result includes port information of the radio frequency device, and the port information of the radio frequency device indicates the output port of the radio frequency device.

With reference to the first aspect and the foregoing implementations of the first aspect, in another implementation of the first aspect, the source route probe frame includes the port information of the baseband device, and the port information of the baseband device indicates the target port of the baseband device.

With reference to the first aspect and the foregoing implementations of the first aspect, in another implementation of the first aspect, the source route probe frame further includes the port information of the radio frequency device, and the port information of the radio frequency device indicates the output port of the radio frequency device.

With reference to the first aspect and the foregoing implementations of the first aspect, in another implementation of the first aspect, the destination route probe frame further includes the port information of the radio frequency device, and the port information of the radio frequency device indicates the output port of the radio frequency device.

With reference to the first aspect and the foregoing implementations of the first aspect, in another implementation of the first aspect, the method further includes: receiving, by the baseband device, an indication message sent by the EMS, where the indication message is used to instruct the baseband device to send the source route probe frame.

According to a second aspect, a method for probing a fronthaul topology is provided, and the method includes: receiving, by a first transport network device in a transport network, a source route probe frame sent by a baseband device, where the source route probe frame is sent to a radio frequency device by using the transport network; recording, by the first transport network device, first port information in the source route probe frame, to obtain a first route probe frame, where the first port information indicates an input port that is of the first transport network device and that is connected to a target port of the baseband device; sending, by the first transport network device, the first route probe frame to a second transport network device in the transport network; receiving, by the first transport network device, a destination route probe frame sent by the second transport network device, where the destination route probe frame is formed after the second transport network device records second port information in the first route probe frame, the destination route probe frame carries the first port information and the second port information, and the second port information indicates an output port that is of the second transport network device and that is connected to a receive port of the radio frequency device; and sending, by the first transport network device, the destination route probe frame to the baseband device.

With reference to the second aspect, in an implementation of the second aspect, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device; and the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

With reference to the second aspect and the foregoing implementation of the second aspect, in another implementation of the second aspect, the source route probe frame includes port information of the baseband device, and the port information of the baseband device indicates the target port of the baseband device.

With reference to the second aspect and the foregoing implementations of the second aspect, in another implementation of the second aspect, the source route probe frame further includes port information of the radio frequency device, and the port information of the radio frequency device indicates the receive port of the radio frequency device.

With reference to the second aspect and the foregoing implementations of the second aspect, in another implementation of the second aspect, the destination route probe frame carries port information of the radio frequency device, and the port information of the radio frequency device indicates the receive port of the radio frequency device.

According to a third aspect, a method for probing a fronthaul topology is provided, and the method includes: receiving, by a transport network device in a transport network, a route probe frame sent by a wireless sending device, where the route probe frame includes transmit port information of the wireless sending device, and the transmit port information indicates a transmit port that is of the wireless sending device and that is connected to an input port of the transport network device; and sending, by the transport network device, probe information to an element management system EMS according to the route probe frame, where the probe information is used to indicate that the transmit port of the wireless sending device is connected to the input port of the transport network device.

With reference to the third aspect, in an implementation of the third aspect, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

With reference to the third aspect and the foregoing implementation of the third aspect, in another implementation of the third aspect, the probe information includes the transmit port information and input port information of the transport network device, and the input port information indicates the input port of the transport network device.

With reference to the third aspect and the foregoing implementations of the third aspect, in another implementation of the third aspect, the input port information includes at least one of a device identifier of the transport network device, a device type, a number of a subrack in which the input port is located, a number of a cabinet in which the input port is located, a number of a slot in which the input port is located, a port number of the input port, or a working status of the transport network device.

With reference to the third aspect and the foregoing implementations of the third aspect, in another implementation of the third aspect, the route probe frame further includes receive port information of a wireless receiving device corresponding to the wireless sending device, and the receive port information indicates the receive port of the wireless receiving device.

With reference to the third aspect and the foregoing implementations of the third aspect, in another implementation of the third aspect, the probe information includes the receive port information.

With reference to the third aspect and the foregoing implementations of the third aspect, in another implementation of the third aspect, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

With reference to the third aspect and the foregoing implementations of the third aspect, in another implementation of the third aspect, the wireless sending device is a baseband device, and the wireless receiving device is a radio frequency device; or the wireless sending device is a radio frequency device, and the wireless receiving device is a baseband device.

According to a fourth aspect, a method for probing a fronthaul topology is provided, and the method includes: generating, by a wireless sending device, a route probe frame, where the route probe frame includes transmit port information of the wireless sending device, and the transmit port information indicates a transmit port that is of the wireless sending device and that is connected to a transport network device; and sending, by the wireless sending device, the route probe frame to the transport network device.

With reference to the fourth aspect, in an implementation of the fourth aspect, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

With reference to the fourth aspect and the foregoing implementation of the fourth aspect, in another implementation of the fourth aspect, the route probe frame further includes receive port information of a wireless receiving device corresponding to the wireless sending device, and the receive port information indicates a receive port of the wireless receiving device.

With reference to the fourth aspect and the foregoing implementations of the fourth aspect, in another implementation of the fourth aspect, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

With reference to the fourth aspect and the foregoing implementations of the fourth aspect, in another implementation of the fourth aspect, the method further includes: receiving, by the wireless sending device, indication information sent by an element management system EMS, where the indication information is used to instruct the baseband device to send the route probe frame.

With reference to the fourth aspect and the foregoing implementations of the fourth aspect, in another implementation of the fourth aspect, the wireless sending device is a baseband device, and the wireless receiving device is a radio frequency device; or the wireless sending device is a radio frequency device, and the wireless receiving device is a baseband device.

According to a fifth aspect, a baseband device is provided, and the baseband device includes: a first sending module, configured to send a source route probe frame to a first transport network device in a transport network, where the source route probe frame is sent to a radio frequency device by using the transport network; a first receiving module, configured to receive a destination route probe frame sent by the first transport network device, where the destination route probe frame is formed after the first transport network device records first port information in the source route probe frame and a second transport network device in the transport network records second port information in the source route probe frame, the first port information indicates an input port that is of the first transport network device and that is connected to a target port of the baseband device, and the second port information indicates an output port that is of the second transport network device and that is connected to a receive port of the radio frequency device; a determining module, configured to determine probe information according to the destination route probe frame, where the probe information indicates that the target port of the baseband device is connected to the input port of the first transport network device, and that the output port of the second transport network device is connected to the receive port of the radio frequency device; and a second sending module, configured to send the probe information to an element management system EMS.

With reference to the fifth aspect, in an implementation of the fifth aspect, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device; and the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

With reference to the fifth aspect and the foregoing implementation of the fifth aspect, in another implementation of the fifth aspect, the probe information includes port information of the baseband device, the first port information, and the second port information, and the port information of the baseband device indicates the target port of the baseband device.

With reference to the fifth aspect and the foregoing implementations of the fifth aspect, in another implementation of the fifth aspect, the probe result includes port information of the radio frequency device, and the port information of the radio frequency device indicates the output port of the radio frequency device.

With reference to the fifth aspect and the foregoing implementations of the fifth aspect, in another implementation of the fifth aspect, the source route probe frame includes the port information of the baseband device, and the port information of the baseband device indicates the target port of the baseband device.

With reference to the fifth aspect and the foregoing implementations of the fifth aspect, in another implementation of the fifth aspect, the source route probe frame further includes the port information of the radio frequency device, and the port information of the radio frequency device indicates the output port of the radio frequency device.

With reference to the fifth aspect and the foregoing implementations of the fifth aspect, in another implementation of the fifth aspect, the destination route probe frame further includes the port information of the radio frequency device, and the port information of the radio frequency device indicates the output port of the radio frequency device.

With reference to the fifth aspect and the foregoing implementations of the fifth aspect, in another implementation of the fifth aspect, the baseband device further includes: a second receiving module, configured to receive an indication message sent by the EMS, where the indication message is used to instruct the baseband device to send the source route probe frame.

According to a sixth aspect, a baseband device is provided, and the baseband device includes: a first receiving module, configured to receive a source route probe frame sent by a baseband device, where the source route probe frame is sent to a radio frequency device by using the transport network; a processing module, configured to record first port information in the source route probe frame, to obtain a first route probe frame, where the first port information indicates an input port that is of the first transport network device and that is connected to a target port of the baseband device; a first sending module, configured to send the first route probe frame to a second transport network device in the transport network; a second receiving module, configured to receive a destination route probe frame sent by the second transport network device, where the destination route probe frame is formed after the second transport network device records second port information in the first route probe frame, the destination route probe frame carries the first port information and the second port information, and the second port information indicates an output port that is of the second transport network device and that is connected to a receive port of the radio frequency device; and a second sending module, configured to send the destination route probe frame to the baseband device.

With reference to the sixth aspect, in an implementation of the sixth aspect, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device; and the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

With reference to the sixth aspect and the foregoing implementation of the sixth aspect, in another implementation of the sixth aspect, the source route probe frame includes port information of the baseband device, and the port information of the baseband device indicates the target port of the baseband device.

With reference to the sixth aspect and the foregoing implementations of the sixth aspect, in another implementation of the sixth aspect, the source route probe frame further includes port information of the radio frequency device, and the port information of the radio frequency device indicates the receive port of the radio frequency device.

With reference to the sixth aspect and the foregoing implementations of the sixth aspect, in another implementation of the sixth aspect, the destination route probe frame carries port information of the radio frequency device, and the port information of the radio frequency device indicates the receive port of the radio frequency device.

According to a seventh aspect, a baseband device is provided, and the baseband device includes: a receiving module, configured to receive a route probe frame sent by a wireless sending device, where the route probe frame includes transmit port information of the wireless sending device, and the transmit port information indicates a transmit port that is of the wireless sending device and that is connected to an input port of the transport network device; and a sending module, configured to send probe information to an element management system EMS according to the route probe frame, where the probe information is used to indicate that the transmit port of the wireless sending device is connected to the input port of the transport network device.

With reference to the seventh aspect, in an implementation of the seventh aspect, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

With reference to the seventh aspect and the foregoing implementation of the seventh aspect, in another implementation of the seventh aspect, the probe information includes the transmit port information and input port information of the transport network device, and the input port information indicates the input port of the transport network device.

With reference to the seventh aspect and the foregoing implementations of the seventh aspect, in another implementation of the seventh aspect, the input port information includes at least one of a device identifier of the transport network device, a device type, a number of a subrack in which the input port is located, a number of a cabinet in which the input port is located, a number of a slot in which the input port is located, a port number of the input port, or a working status of the transport network device.

With reference to the seventh aspect and the foregoing implementations of the seventh aspect, in another implementation of the seventh aspect, the route probe frame further includes receive port information of a wireless receiving device corresponding to the wireless sending device, and the receive port information indicates the receive port of the wireless receiving device.

With reference to the seventh aspect and the foregoing implementations of the seventh aspect, in another implementation of the seventh aspect, the probe information includes the receive port information.

With reference to the seventh aspect and the foregoing implementations of the seventh aspect, in another implementation of the seventh aspect, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

With reference to the seventh aspect and the foregoing implementations of the seventh aspect, in another implementation of the seventh aspect, the wireless sending device is a baseband device, and the wireless receiving device is a radio frequency device; or the wireless sending device is a radio frequency device, and the wireless receiving device is a baseband device.

According to an eighth aspect, a baseband device is provided, and the baseband device includes: a generation module, configured to generate a route probe frame, where the route probe frame includes transmit port information of the wireless sending device, and the transmit port information indicates a transmit port that is of the wireless sending device and that is connected to a transport network device; and a sending module, configured to send the route probe frame to the transport network device.

With reference to the eighth aspect, in an implementation of the eighth aspect, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

With reference to the eighth aspect and the foregoing implementation of the eighth aspect, in another implementation of the eighth aspect, the route probe frame further includes receive port information of a wireless receiving device corresponding to the wireless sending device, and the receive port information indicates a receive port of the wireless receiving device.

With reference to the eighth aspect and the foregoing implementations of the eighth aspect, in another implementation of the eighth aspect, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

With reference to the eighth aspect and the foregoing implementations of the eighth aspect, in another implementation of the eighth aspect, the wireless sending device further includes: a receiving module, configured to receive indication information sent by an element management system EMS, where the indication information is used to instruct the baseband device to send the route probe frame.

With reference to the eighth aspect and the foregoing implementations of the eighth aspect, in another implementation of the eighth aspect, the wireless sending device is a baseband device, and the wireless receiving device is a radio frequency device; or the wireless sending device is a radio frequency device, and the wireless receiving device is a baseband device.

Based on the foregoing technical solutions, according to the method and the apparatus for probing a fronthaul topology in the embodiments of the present invention, the wireless sending device sends, to the wireless receiving device, the route probe frame used to probe a path, so that the transport network device that receives the route probe frame records the receive port that receives the route probe frame, and the transport network device that is connected to the wireless receiving device records the transmit port, and returns the route probe frame to the wireless sending device. Then, the wireless sending device may report the probe result to the wireless EMS, so that the wireless EMS can determine the information about the topology between the wireless device and the transport network device according to the probe result, and determine a connection relationship between ports of various devices.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for probing a fronthaul topology according to an embodiment of the present invention;
FIG. 2 is a schematic diagram of a fronthaul topology according to an embodiment of the present invention;
FIG. 3 is a schematic flowchart of source route probe according to an embodiment of the present invention;
FIG. 4 is a schematic flowchart of a route probe frame method according to an embodiment of the present invention;
FIG. 5 is a schematic flowchart of another route probe frame according to an embodiment of the present invention;
FIG. 6 is a schematic flowchart of still another route probe frame according to an embodiment of the present invention;
FIG. 7 is a schematic flowchart of a method for probing a fronthaul topology according to another embodiment of the present invention;
FIG. 8 is a schematic flowchart of a method for probing a fronthaul topology according to still another embodiment of the present invention;
FIG. 9 is a schematic flowchart of a method for probing a fronthaul topology according to yet another embodiment of the present invention;
FIG. 10 is a schematic flowchart of a method for probing a fronthaul topology according to still yet another embodiment of the present invention;
FIG. 11 is a schematic block diagram of a baseband device according to an embodiment of the present invention;
FIG. 12 is a schematic block diagram of a first transport network device according to an embodiment of the present invention;
FIG. 13 is a schematic block diagram of a transport network device according to an embodiment of the present invention;
FIG. 14 is a schematic block diagram of a wireless sending device according to an embodiment of the present invention;
FIG. 15 is a schematic block diagram of a baseband device according to another embodiment of the present invention;
FIG. 16 is a schematic block diagram of a first transport network device according to another embodiment of the present invention;
FIG. 17 is a schematic block diagram of a transport network device according to another embodiment of the present invention; and
FIG. 18 is a schematic block diagram of a wireless sending device according to another embodiment of the present invention.

### DESCRIPTION OF EMBODIMENTS

The following clearly and completely describes the technical solutions in the embodiments of the present invention with reference to accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, LTE time division duplex (Time Division Duplex, "TDD" for short), a Universal Mobile Telecommunications System (Universal Mobile Telecommunications System, "UMTS" for short), and a Worldwide Interoperability for Microwave Access (Worldwide Interoperability for Microwave Access, "WiMAX" for short) communications system.

Because a radio frequency unit and a baseband unit of a distributed base station are usually physically connected by using an optical fiber or a cable, and the CPRI protocol is used in terms of a service, to use installed optical fibers of an operator, and reduce overall costs of CRAN deployment, the operator introduces an optical transmission device (usually an OTN device) in a fronthaul process, and reuses existing optical fibers to a station, so as to reduce the overall costs.

After the transmission device is introduced, a path between a wireless device and the transmission device becomes as follows: a radio frequency unit->an optical module of the radio frequency unit->an optical module that is on a radio frequency side and that is of a field transmission device->the field transmission device->an optical module that is on a baseband side and that is of the field transmission device->an optical fiber->an optical module that is on a radio frequency side and that is of a transmission device in an equipment room->a transmission device in the equipment room->an optical module that is on a baseband side and that is of the transmission device in the equipment room->an optical module of a baseband unit->the baseband unit. To locate a fault, a loopback operation may be performed to check a fault. In this case, an accurate connection relationship among the radio frequency unit, the field transmission device, the transmission device in the equipment room, and the baseband unit needs to be known. Therefore, the embodiments of the present invention provide a method and an apparatus for probing a fronthaul topology.

Specifically, the method for probing a fronthaul topology in the embodiments of the present invention may be referred to as a Fronthaul Topology Scan Protocol (Fronthaul Topology Scan Protocol, "FTSP" for short). Specifically, according to a probing method, the Fronthaul Topology Scan Protocol may be divided into two categories: an LFTSP (loopback FTSP) and an SFTSP (single-way FTSP). Embodiments for each of the two categories may further be divided into two types: automatic operation and manual operation. That is, there are four methods in total, and the four methods may be respectively referred to as an ALFTSP (automatic loopback FTSP), an MLFTSP (manual loopback FTSP), an ASFTSP (automatic single-way FTSP), and an MSFTSP (manual single-way FTSP).

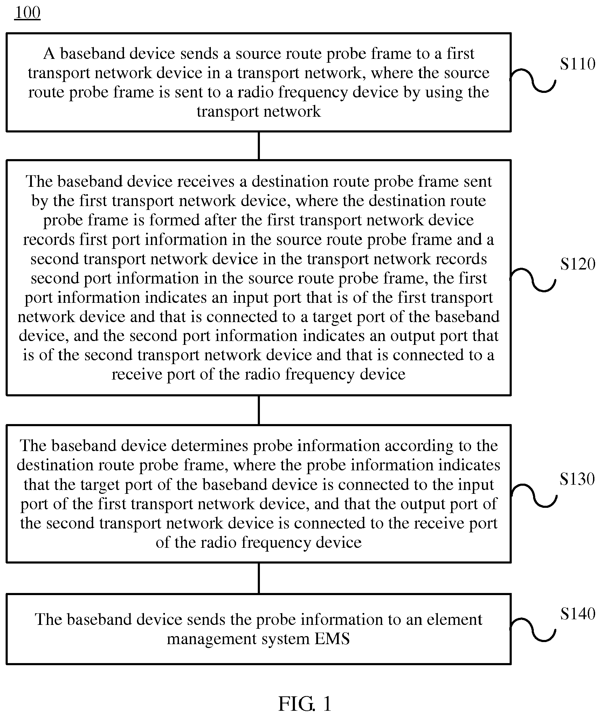

FIG. 1 shows a schematic flowchart of a method 100 for probing a fronthaul topology according to an embodiment of the present invention. The method 100 may be performed by a baseband device. The method 100 may be referred to as an LFTSP (loopback FTSP). As shown in FIG. 1, the method 100 includes:
S110. A baseband device sends a source route probe frame to a first transport network device in a transport network, where the source route probe frame is sent to a radio frequency device by using the transport network.
S120. The baseband device receives a destination route probe frame sent by the first transport network device, where the destination route probe frame is formed after the first transport network device records first port information in the source route probe frame and a second transport network device in the transport network records second port information in the source route probe frame, the first port information indicates an input port that is of the first transport network device and that is connected to a target port of the baseband device, and the second port information indicates an output port that is of the second transport network device and that is connected to a receive port of the radio frequency device.
S130. The baseband device determines probe information according to the destination route probe frame, where the probe information indicates that the target port of the baseband device is connected to the input port of the first transport network device, and that the output port of the second transport network device is connected to the receive port of the radio frequency device.
S140. The baseband device sends the probe information to an element management system EMS.

Specifically, to probe fronthaul topology information, the wireless EMS may instruct the baseband device to periodically or randomly perform topology probe, and instruct the baseband device to send the source route probe frame to the radio frequency device by using the transport network devices. The first transport network device that is in the transport network and that is connected to the baseband device receives the source route probe frame, and records the first port information in the source route probe frame. The first port information indicates the input port that is of the first transport network device and that is connected to the target port of the baseband device. The source route probe frame continues to be forwarded by using the transport network. When the source route probe frame is transmitted to the second transport network device that is connected to the radio frequency device, the second transport network device records the second port information in the source route probe frame. The second port information indicates the output port that is of the second transport network device and that is connected to the receive port of the radio frequency device. After the first port information and the second port information are recorded in the source route probe frame, the destination route probe frame is formed. The destination route probe frame may be returned to the baseband device by using the transport network. The baseband device determines the probe information according to the destination route probe frame. The probe information indicates that the target port of the baseband device is connected to the input port of the first transport network device, and that the output port of the second transport network device is connected to the receive port of the radio frequency device. Then, the determined probe information is sent to the wireless EMS, so that the wireless EMS can determine information about a topology among the baseband device, the transport network, and the radio frequency device according to the received probe information.

Therefore, according to the method for probing a fronthaul topology in this embodiment of the present invention, the baseband device sends, to the radio frequency device by using the transport network, the source route probe frame used to probe a path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain a fronthaul topology according to the probe result, determine information about a topology between a wireless device and a transport network device, and determine a connection relationship between ports of various devices.

In S110, the baseband device sends the source route probe frame to the first transport network device in the transport network, where the source route probe frame is sent to the radio frequency device by using the transport network. The source route probe frame is used to probe a fronthaul (Fronthaul) topology, that is, to probe a specific connection relationship among the baseband device, the transport network, and the radio frequency device. Specifically, the source route probe frame may be used to probe a connection relationship of any port of the baseband device. Optionally, the source route probe frame may be defined in a vendor specific field of control words within one hyperframe (control words within one hyperframe) of the CPRI protocol. Selected subchannel number Ns and Xs are examples. Actually, the source route probe frame may be placed at any location of the vendor specific field. The present invention is not limited thereto.

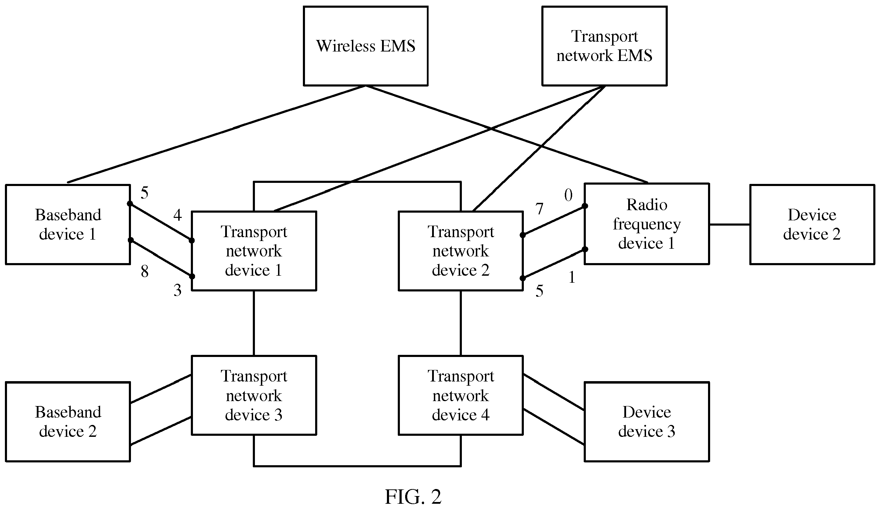

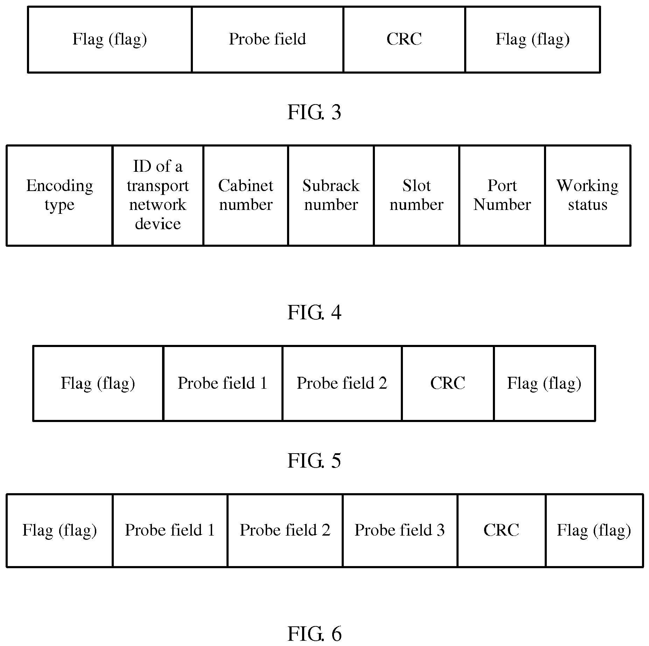

Optionally, in this embodiment of the present invention, the source route probe frame may include port information of the baseband device. The port information of the baseband device indicates the target port of the baseband device. The target port may be any to-be-detected port of the baseband device. For example, as shown in FIG. 2, a baseband device 1 may include multiple ports, and the target port may be any port of the baseband device, for example, a port 5. The source route probe frame may include port information that indicates the port 5 of the baseband device 1, and the source route probe frame is used to probe information about a topology between the port 5 and the radio frequency device. As shown in FIG. 3, the source route probe frame may be shown in FIG. 3, and the port information of the baseband device may be located in a Flag (flag) field of the source route probe frame. However, the present invention is not limited thereto.

Specifically, the port information of the baseband device may include a device identifier of the baseband device and a port number of the target port of the baseband device. The target port may be determined according to the port information. Optionally, the port information of the baseband device may further include one or more of a device type of the baseband device, a subrack number of the target port, a cabinet number of the target port, a slot number of the target port, or a working status of the baseband device. The present invention is not limited thereto.

Optionally, in this embodiment of the present invention, the source route probe frame may further include port information of the radio frequency device. The port information of the radio frequency device indicates the receive port that is of the radio frequency device and that is corresponding to the to-be-detected target port of the baseband device. For example, as shown in FIG. 2, the port 5 of the baseband device 1 is detected, that is, the target port is the port 5. A port corresponding to the target port may be a port 0 of a radio frequency device 1. The source route probe device may include the port information that indicates the target port 5 of the baseband device, and may further include port information that indicates the port 0 of the radio frequency device 1, so that the device in the transport network may send the source route probe frame to the radio frequency device according to the received source route probe frame. As shown in FIG. 3, the source route probe frame may be shown in FIG. 3, and the port information of the radio frequency device may be located in a Flag (flag) field. However, the present invention is not limited thereto.

Specifically, the port information of the radio frequency device may include a device identifier of the radio frequency device and a port number of the receive port of the radio frequency device, where the receive port of the radio frequency device may be determined according to the port information. Optionally, the port information of the radio frequency device may further include one or more of a device type of the radio frequency device, a subrack number of the receive port, a cabinet number of the receive port, a slot number of the receive port, or a working status of the radio frequency device. The present invention is not limited thereto.

In this embodiment of the present invention, the baseband device sends the source route probe frame to the transport network. Optionally, a management tool of a base station, for example, the wireless EMS, may send indication information to the baseband device. The indication information is used to instruct the baseband device to send the source route probe frame to the transport network. In this method, a fronthaul topology may be probed at any time, and the wireless EMS instructs, at any moment, the baseband device to perform probe. This method may be referred to as an MLFTSP (manual loopback FTSP). Optionally, the baseband device may be set to periodically send the source route probe frame. For example, the baseband device may be set to send the source route probe frame every five hours. This method may be referred to as an ALFTSP (automatic loopback FTSP). The present invention is not limited thereto.

In S120, the baseband device receives the destination route probe frame sent by the first transport network device. The destination route probe frame is formed after the first transport network device records the first port information in the source route probe frame and the second transport network device in the transport network records the second port information in the source route probe frame; that is, the destination route probe frame is obtained after the first transport network device records the first port information in the source route probe frame and the second transport network device records the second port information in the source route probe frame. The first port information indicates the input port that is of the first transport network device and that is connected to the target port of the baseband device, and the second port information indicates the output port that is of the second transport network device and that is connected to the receive port of the radio frequency device.

In this embodiment of the present invention, the baseband device sends the source route probe frame to the radio frequency device by using the transport network devices in the transport network. When the source route probe frame passes through the first transport network device, the first transport network device records the first port information in the source route probe frame. Specifically, when the source route probe frame passes through the first transport network device in the transport network, the first port information of the first transport network device is recorded, to obtain a first route probe frame. The first transport network device is connected to the baseband device. The first port information indicates the input port of the first transport network device. The input port is connected to the target port of the baseband device. For example, as shown in FIG. 2, the port 5 of the baseband device 1 sends the source route probe frame, and the first transport network device, that is, a transport network device 1 in FIG. 2, receives the source route probe frame, and records port information of an input port 4 in the source route probe frame, to obtain the first route probe frame.

Optionally, in this embodiment of the present invention, the first port information may include a device identifier of the first transport network device and a port number of the input port of the first transport network device. Optionally, the first port information may further include one or more of a device type of the first transport network device, a number of a subrack in which the input port of the first transport network device is located, a number of a cabinet in which the input port of the first transport network device is located, a number of a slot in which the input port of the first transport network device is located, or a working status of the first transport network device. The present invention is not limited thereto. Specifically, as shown in FIG. 3, the first port information may be located in a probe field. FIG. 4 may be used as an example. The probe field may specifically include an encoding type, the device identifier ID of the first transport network device, the cabinet number, the subrack number, the slot number, the port number, and the working status. After the first transport network device adds the port information of the input port to the probe field of the source route probe frame, the first route probe frame is obtained. The first route probe frame carries the first port information.

In this embodiment of the present invention, the first route probe frame is obtained after the first transport network device records the first port information in the source route probe frame. The first route probe frame continues to be transmitted to a next-level transport network device. The transport network device that receives the first route probe frame may continue to add port information to the first route probe frame, for example, continue to add a new probe field, and add the port information to the new probe field. The port information may include port information of a port of each transport network device that is located after the first transport network device and through which the first route probe frame passes. Optionally, because an element management system EMS of the transport network device may obtain information about a topology between devices in the transport network, the transport network device in the transport network may not record port information in the first route probe frame, and forward the received first route probe frame without rewriting or adding. However, the present invention is not limited thereto.

In this embodiment of the present invention, the baseband device sends the source route probe frame to the radio frequency device by using the transport network devices in the transport network. The first route probe frame is obtained after the first transport network device records the first port information in the source route probe frame. The first route probe frame is forwarded in the transport network, until the first route probe frame is transmitted to the second transport network device in the transport network. The second transport network device is directly connected to the radio frequency device. The second transport network device records the second port information of the second transport network device in the first route probe frame, to obtain a second route probe frame. The second transport network device is connected to the radio frequency device. The second port information indicates the output port of the second transport network device. The output port is connected to the receive port of the radio frequency device. For example, as shown in FIG. 2, if the transport network device connected to the radio frequency device is a transport network device 2, after receiving the first route probe frame, the transport network device 2 records port information of a port 7 in the first route probe frame. The port 7 is connected to the port 0 of the radio frequency device.

Optionally, in this embodiment of the present invention, the second port information may include a device identifier of the second transport network device and a port number of the output port of the second transport network device. Optionally, the second port information may further include one or more of a device type of the second transport network device, a number of a subrack in which the output port of the second transport network device is located, a number of a cabinet in which the output port of the second transport network device is located, a number of a slot in which the output port of the second transport network device is located, or a working status of the second transport network device. The present invention is not limited thereto. Specifically, a new probe field may be added to the first route probe frame. For example, as shown in FIG. 5, FIG. 5 shows the second route probe frame. A probe field 1 may carry the first port information. The second port information may be located in a newly added probe field 2. For the probe field, FIG. 4 may also be used as an example. The probe field 2 may specifically include an encoding type, the device identifier ID of the second transport network device, the cabinet number, the subrack number, the slot number, the port number, and the working status. After the second transport network device adds the port information of the output port to the probe field of the first route probe frame, that is, the probe field may include the first port information and the second port information, the second route probe frame is obtained.

In this embodiment of the present invention, the first route probe frame is obtained after the first transport network device records the first port information in the source route probe frame. The second route probe frame is obtained after the second transport network device records the second port information in the first route probe frame. In this case, a next-level device of the second transport network device is the radio frequency device. If the source route probe frame sent by the baseband device carries the port information of the receive port of the radio frequency device, when detecting that the next-level device is the radio frequency device, the second transport network device may return the second route probe frame, and determine the second route probe frame as the destination route probe frame. The destination route probe frame includes the first port information and the second port information, and the destination route probe frame is returned to the baseband device after forwarding of the transport network device.

Optionally, in this embodiment of the present invention, even if the source route probe frame sent by the baseband device carries the port information of the receive port of the radio frequency device, after detecting that the next-level device is the radio frequency device, the second transport network device may still continue to send the second route probe frame to the radio frequency device. Alternatively, if the source route probe frame sent by the baseband device does not carry the port information of the receive port of the radio frequency device, the second transport network device may also continue to send the second route probe frame to the radio frequency device. After the radio frequency device receives the second route probe frame, the radio frequency device records the port information of the receive port in the second route probe frame, to obtain the destination route probe frame. The port information of the radio frequency device indicates the receive port of the radio frequency device. The receive port of the radio frequency device is connected to the output port of the second transport network device.

Optionally, in this embodiment of the present invention, the port information of the radio frequency device may include the device identifier of the radio frequency device and the port number of the receive port of the radio frequency device. The receive port of the radio frequency device may be determined according to the port information. Optionally, the port information of the radio frequency device may further include one or more of the device type of the radio frequency device, the subrack number of the receive port, the cabinet number of the receive port, the slot number of the receive port, or the working status of the radio frequency device. The present invention is not limited thereto. Specifically, a new probe field may be added to the second route probe frame. The newly added probe field is used to record the port information of the radio frequency device. As shown in FIG. 6, FIG. 6 shows the destination route probe frame. A probe field 1 of the destination route probe frame may carry the first port information, the second port information may be located in a probe field 2, and the receive port information of the radio frequency device may be added to a probe field 3. For a specific form of the probe field 3, FIG. 4 may also be used as an example. The probe field 3 may specifically include an encoding type, the device identifier ID of the radio frequency device, the cabinet number, the subrack number, the slot number, the port number, and the working status. After the port information of the receive port of the radio frequency device is added to the probe field of the second route probe frame, that is, the probe field of the destination route probe frame may include the first port information, the second port information, and the port information of the radio frequency device. In this embodiment of the present invention, the radio frequency device may return the determined destination route probe frame to the baseband device by using the transport network devices in the transport network.

In S130, the baseband device determines the probe information according to the destination route probe frame, where the probe information indicates that the target port of the baseband device is connected to the input port of the first transport network device, and that the output port of the second transport network device is connected to the receive port of the radio frequency device. Specifically, the baseband device may determine the probe information according to the first port information and the second port information in the destination route probe frame returned from the transport network. The probe information may include the port information of the target port of the baseband radio frequency, the first port information of the first transport network device, and the second port information of the second transport network device. Optionally, the probe information may further include the port information of the receive port of the radio frequency device corresponding to the baseband device.

In S140, the baseband device sends the probe information to the element management system EMS, so that the EMS may determine the information about a topology among the baseband device, the transport network, and the radio frequency device according to the probe information. Specifically, the EMS may be a wireless EMS connected to the baseband device and the radio frequency device. The wireless EMS receives the probe information, and may determine, according to the port information of the target port of the baseband device, the first port information, the second port information, and the port information of the receive port of the radio frequency device that are in the probe information, that the target port of the baseband device is connected to the input port of the first transport network device and the input port of the second transport network device is connected to the radio frequency device. The wireless EMS may receive probe information of multiple ports of at least one baseband device, determine a connection relationship among each port, a corresponding transport network device, and a radio frequency device according to probe information of each port, and determine information about the topology among the baseband device, the transport network device, and the radio frequency device according to the connection relationship.

Therefore, according to the method for probing a fronthaul topology in this embodiment of the present invention, the baseband device sends, to the radio frequency device by using the transport network, the source route probe frame used to probe the path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain the fronthaul topology according to the probe result, determine the information about the topology between the wireless device and the transport network device, and determine the connection relationship between the ports of the various devices.

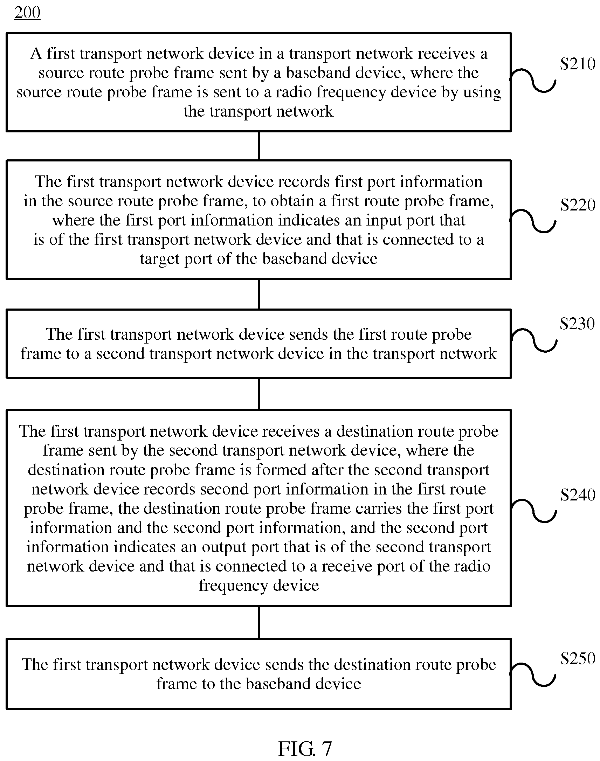

The foregoing has described in detail the method for probing a fronthaul topology according to the embodiments of the present invention from a perspective of the baseband device with reference to FIG. 1 to FIG. 6. The following describes a method for probing a fronthaul topology according to an embodiment of the present invention from a perspective of a transport network device with reference to FIG. 7.

FIG. 7 shows a schematic flowchart of a method 200 for probing a fronthaul topology according to an embodiment of the present invention. The method 200 may be performed by a first transport network device in a transport network, where the first transport network device is connected to a baseband device. As shown in FIG. 7, the method 200 includes:
S210. A first transport network device in a transport network receives a source route probe frame sent by a baseband device, where the source route probe frame is sent to a radio frequency device by using the transport network.
S220. The first transport network device records first port information in the source route probe frame, to obtain a first route probe frame, where the first port information indicates an input port that is of the first transport network device and that is connected to a target port of the baseband device.
S230. The first transport network device sends the first route probe frame to a second transport network device in the transport network.
S240. The first transport network device receives a destination route probe frame sent by the second transport network device, where the destination route probe frame is formed after the second transport network device records second port information in the first route probe frame, the destination route probe frame carries the first port information and the second port information, and the second port information indicates an output port that is of the second transport network device and that is connected to a receive port of the radio frequency device.
S250. The first transport network device sends the destination route probe frame to the baseband device.

Therefore, according to the method for probing a fronthaul topology in this embodiment of the present invention, the first transport network device that is in the transport network and that is connected to the baseband device receives the source route probe frame sent by the baseband device, and records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines probe result information according to the destination route probe frame and reports the probe result information to a wireless EMS, and the wireless EMS can quickly and accurately obtain a fronthaul topology according to the probe result, determine information about a topology between a wireless device and a transport network device, and determine a connection relationship between ports of various devices. In this way, fault detection can be easily performed on fronthaul parts by performing a loopback operation.

In S210, the first transport network device in the transport network receives the source route probe frame sent by the baseband device. The source route probe frame is sent to the radio frequency device by using the transport network. The source route probe frame is used to probe information about a topology among the baseband device, the transport network device, and the radio frequency device. Specifically, the source route probe frame may be used to probe a connection relationship of any port of the baseband device. Optionally, the source route probe frame may be defined in a vendor specific field of control words within one hyperframe (control words within one hyperframe) of the CPRI protocol. Selected subchannel number Ns and Xs are examples. Actually, the source route probe frame may be placed at any location of the vendor specific field. The present invention is not limited thereto.

Optionally, in this embodiment of the present invention, the source route probe frame may include port information of the baseband device. The port information of the baseband device indicates the target port of the baseband device. The target port may be any to-be-detected port of the baseband device. For example, as shown in FIG. 2, a baseband device 1 may include multiple ports, and the target port may be any port of the baseband device, for example, a port 5. The source route probe frame may include port information that indicates the port 5 of the baseband device 1, and the source route probe frame is used to probe information about a topology between the port 5 and the radio frequency device. As shown in FIG. 3, the source route probe frame may be shown in FIG. 3, and the port information of the baseband device may be located in a Flag (flag) field of the source route probe frame. However, the present invention is not limited thereto.

Specifically, the port information of the baseband device may include a device identifier of the baseband device and a port number of the target port of the baseband device. The target port may be determined according to the port information. Optionally, the port information of the baseband device may further include one or more of a device type of the baseband device, a subrack number of the target port, a cabinet number of the target port, a slot number of the target port, or a working status of the baseband device. The present invention is not limited thereto.

Optionally, in this embodiment of the present invention, the source route probe frame may further include port information of the radio frequency device. The port information of the radio frequency device indicates the receive port that is of the radio frequency device and that is corresponding to the to-be-detected target port of the baseband device. For example, as shown in FIG. 2, the port 5 of the baseband device 1 is detected, that is, the target port is the port 5. A port corresponding to the target port may be a port 0 of a radio frequency device 1. The source route probe device may include the port information that indicates the target port 5 of the baseband device, and may further include port information that indicates the port 0 of the radio frequency device 1, so that the device in the transport network may send the source route probe frame to the radio frequency device according to the received source route probe frame. As shown in FIG. 3, the source route probe frame may be shown in FIG. 3, and the port information of the radio frequency device may be located in a Flag (flag) field. However, the present invention is not limited thereto.

Specifically, the port information of the radio frequency device may include a device identifier of the radio frequency device and a port number of the receive port of the radio frequency device, where the receive port of the radio frequency device may be determined according to the port information. Optionally, the port information of the radio frequency device may further include one or more of a device type of the radio frequency device, a subrack number of the receive port, a cabinet number of the receive port, a slot number of the receive port, or a working status of the radio frequency device. The present invention is not limited thereto.

In S220, the first transport network device records the first port information in the source route probe frame, to obtain the first route probe frame, where the first port information indicates the input port that is of the first transport network device and that is connected to the target port of the baseband device. Specifically, when the source route probe frame passes through the first transport network device in the transport network, the first port information of the first transport network device is recorded, to obtain the first route probe frame. The first transport network device is connected to the baseband device. The first port information indicates the input port of the first transport network device. The input port is connected to the target port of the baseband device. For example, as shown in FIG. 2, the port 5 of the baseband device 1 sends the source route probe frame, and the first transport network device, that is, a transport network device 1 in FIG. 2, receives the source route probe frame, and records port information of an input port 4 in the source route probe frame, to obtain the first route probe frame.

Optionally, in this embodiment of the present invention, the first port information may include a device identifier of the first transport network device and a port number of the input port of the first transport network device. Optionally, the first port information may further include one or more of a device type of the first transport network device, a number of a subrack in which the input port of the first transport network device is located, a number of a cabinet in which the input port of the first transport network device is located, a number of a slot in which the input port of the first transport network device is located, or a working status of the first transport network device. The present invention is not limited thereto. Specifically, as shown in FIG. 3, the first port information may be located in a probe field. FIG. 4 may be used as an example. The probe field may specifically include an encoding type, the device identifier ID of the first transport network device, the cabinet number, the subrack number, the slot number, the port number, and the working status. After the first transport network device adds the port information of the input port to the probe field of the source route probe frame, the first route probe frame is obtained. The first route probe frame carries the first port information.

In S230, the first transport network device sends the first route probe frame to the second transport network device in the transport network, so that the second transport network device records the second port information in the first route probe frame. The second transport network device is connected to the radio frequency device. The second port information indicates the output port that is of the second transport network device and that is connected to the radio frequency device.

In this embodiment of the present invention, the first route probe frame is obtained after the first transport network device records the first port information in the source route probe frame. The first route probe frame may continue to be transmitted to a next-level transport network device. The transport network device that receives the first route probe frame may continue to add port information to the first route probe frame, for example, continue to add a new probe field, and add the port information to the new probe field. The port information may include port information of a port of each transport network device that is located after the first transport network device and through which the first route probe frame passes. Optionally, because an element management system EMS of the transport network device may obtain information about a topology between devices in the transport network, the transport network device in the transport network may not record port information in the first route probe frame, and forward the received first route probe frame without rewriting or adding. However, the present invention is not limited thereto.

In S240, the first transport network device receives the destination route probe frame sent by the second transport network device. The destination route probe frame is formed after the second transport network device records the second port information in the first route probe frame, where the destination route probe frame carries the first port information and the second port information, and the second port information indicates the output port that is of the second transport network device and that is connected to the receive port of the radio frequency device.

In this embodiment of the present invention, the first transport network device sends the first route probe frame to the next-level transport network device. The first route probe frame is forwarded in the transport network one time or multiple times, until the first route probe frame is transmitted to the second transport network device in the transport network. The second transport network device is directly connected to the radio frequency device. The second transport network device records the second port information of the second transport network device in the first route probe frame, to obtain a second route probe frame. The second transport network device is connected to the radio frequency device. The second port information indicates the output port of the second transport network device. The output port is connected to the receive port of the radio frequency device. For example, as shown in FIG. 2, if the transport network device connected to the radio frequency device is a transport network device 2, after receiving the first route probe frame, the transport network device 2 records port information of a port 7 in the first route probe frame. The port 7 is connected to the port 0 of the radio frequency device.

Optionally, in this embodiment of the present invention, the second port information may include a device identifier of the second transport network device and a port number of the output port of the second transport network device. Optionally, the second port information may further include one or more of a device type of the second transport network device, a number of a subrack in which the output port of the second transport network device is located, a number of a cabinet in which the output port of the second transport network device is located, a number of a slot in which the output port of the second transport network device is located, or a working status of the second transport network device. The present invention is not limited thereto. Specifically, a new probe field may be added to the first route probe frame. For example, as shown in FIG. 5, FIG. 5 shows the second route probe frame. A probe field 1 may carry the first port information. The second port information may be located in a newly added probe field 2. For the probe field, FIG. 4 may also be used as an example. The probe field 2 may specifically include an encoding type, the device identifier ID of the second transport network device, the cabinet number, the subrack number, the slot number, the port number, and the working status. After the second transport network device adds the port information of the output port to the probe field of the first route probe frame, that is, the probe field may include the first port information and the second port information, the second route probe frame is obtained.

In this embodiment of the present invention, the second route probe frame is obtained after the second transport network device records the second port information in the first route probe frame. In this case, a next-level device of the second transport network device is the radio frequency device. If the source route probe frame sent by the baseband device carries the port information of the receive port of the radio frequency device, when detecting that the next-level device is the radio frequency device, the second transport network device may return the second route probe frame, and determine the second route probe frame as the destination route probe frame. The destination route probe frame includes the first port information and the second port information, and the destination route probe frame is returned to the baseband device after forwarding of the transport network device.

Optionally, in this embodiment of the present invention, even if the source route probe frame sent by the baseband device carries the port information of the receive port of the radio frequency device, after detecting that the next-level device is the radio frequency device, the second transport network device may still continue to send the second route probe frame to the radio frequency device. Alternatively, if the source route probe frame sent by the baseband device does not carry the port information of the receive port of the radio frequency device, the second transport network device may also continue to send the second route probe frame to the radio frequency device. After the radio frequency device receives the second route probe frame, the radio frequency device records the port information of the receive port in the second route probe frame, to obtain the destination route probe frame. The port information of the radio frequency device indicates the receive port of the radio frequency device. The receive port of the radio frequency device is connected to the output port of the second transport network device.

Optionally, in this embodiment of the present invention, the port information of the radio frequency device may include the device identifier of the radio frequency device and the port number of the receive port of the radio frequency device. The receive port of the radio frequency device may be determined according to the port information. Optionally, the port information of the radio frequency device may further include one or more of the device type of the radio frequency device, the subrack number of the receive port, the cabinet number of the receive port, the slot number of the receive port, or the working status of the radio frequency device. The present invention is not limited thereto. Specifically, a new probe field may be added to the second route probe frame. The newly added probe field is used to record the port information of the radio frequency device. As shown in FIG. 6, FIG. 6 shows the destination route probe frame. A probe field 1 of the destination route probe frame may carry the first port information, the second port information may be located in a probe field 2, and the receive port information of the radio frequency device may be added to a probe field 3. For a specific form of the probe field 3, FIG. 4 may also be used as an example. The probe field 3 may specifically include an encoding type, the device identifier ID of the radio frequency device, the cabinet number, the subrack number, the slot number, the port number, and the working status. After the port information of the receive port of the radio frequency device is added to the probe field of the second route probe frame, that is, the probe field of the destination route probe frame may include the first port information, the second port information, and the port information of the radio frequency device. In this embodiment of the present invention, the radio frequency device may return the determined destination route probe frame to the baseband device by using the transport network devices in the transport network.

In S250, the first transport network device sends the destination route probe frame to the baseband device, so that the baseband device may determine the probe information according to the destination route probe frame. The probe information indicates that the target port of the baseband device is connected to the input port of the first transport network device, and that the output port of the second transport network device is connected to the receive port of the radio frequency device. The baseband device sends the probe information to the wireless EMS, so that the EMS can determine information about a topology among the baseband device, the transport network, and the radio frequency device according to the probe information.

It should be understood that sequence numbers of the foregoing processes do not mean execution sequences in the embodiments of the present invention. The execution sequences of the processes should be determined according to functions and internal logic of the processes, but should not constitute any limitation on the implementation processes of the embodiments of the present invention.

Therefore, according to the method for probing a fronthaul topology in this embodiment of the present invention, the first transport network device that is in the transport network and that is connected to the baseband device receives the source route probe frame sent by the baseband device, and records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines the probe result information according to the destination route probe frame and reports the probe result information to the wireless EMS, and the wireless EMS can quickly and accurately obtain the fronthaul topology according to the probe result, determine the information about the topology between the wireless device and the transport network device, and determine the connection relationship between the ports of the various devices.

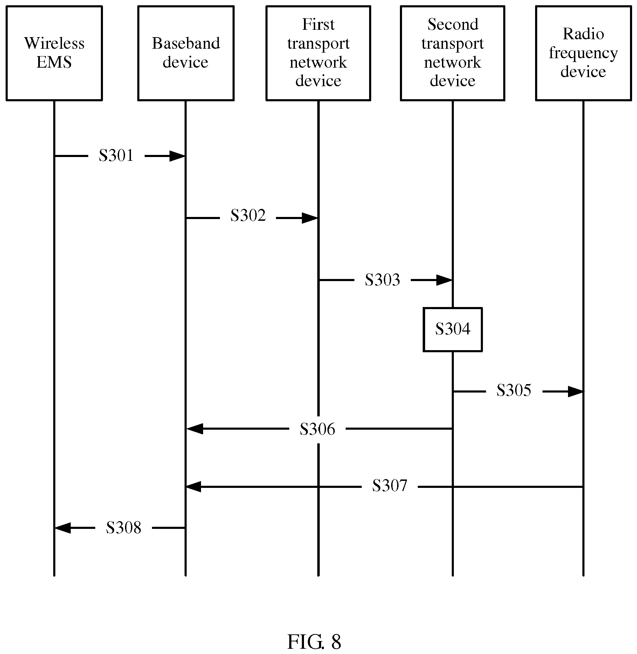

The following describes in detail, by using a specific embodiment as an example, a method for probing a fronthaul topology in the embodiments of the present invention. As shown in FIG. 8, FIG. 8 shows a method for probing a fronthaul topology according to still another embodiment of the present invention.

In S301, a wireless EMS instructs a baseband device to probe a path, and probe information about a topology among the baseband device, a transport network, and a radio frequency device. Optionally, the wireless EMS may set the baseband device to perform detection periodically, or randomly trigger the baseband device to perform detection. The present invention is not limited thereto.

In S302, the baseband device sends a source route probe frame to the radio frequency device according to the instruction by using a transport network. Specifically, the baseband device sends the source route probe frame to a first transport network device in the transport network by using a target port. The source route probe frame may include port information of the baseband device. The port information indicates the target port of the baseband device. The source route probe frame is used to probe a path from the baseband device to the radio frequency device via the target port. Optionally, the source route probe frame may further include port information of the radio frequency device. The port information of the radio frequency device indicates a receive port that is of the radio frequency device and that is corresponding to the target port of the baseband device.

In S303, a first transport network device receives the source route probe frame sent by the baseband device, and records first port information in the source route probe frame, to obtain a first route probe frame, where the first port information indicates an input port that is of the first transport network device and that is connected to a target port of the baseband device. The first transport network device sends the first port information to a second transport network device. The second transport network device is connected to the radio frequency device. Optionally, the first transport network device is a device that is in the transport network and that is connected to the baseband device, and the second transport network device is a device that is in the transport network and that is connected to the radio frequency device. Further, one or more other transport network devices in the transport network may exist between the first transport network device and the second transport network device. In this case, another transport network device may be recorded in the first route probe, or another transport network device may not be recorded in the first route probe frame. In addition, the path from the baseband device to the radio frequency device may pass through only the first transport network device and the second transport network device. The first transport network device and the second transport network device may be a same transport network device. The present invention is not limited thereto.

In S304, a second transport network device receives the first route probe frame sent by the first transport network device, and may record second port information in the first route probe frame, to obtain a second route probe frame, where the second port information indicates an output port that is of the second transport network device in the transport network and that is connected to a receive port of the radio frequency device. Optionally, the second transport network device may determine the determined second route probe frame as a destination route probe frame, and S306 is performed. The second transport network device may continue to send the second route probe frame to the radio frequency device, and S305 and S307 are performed.

Specifically, for example, when the source route probe frame sent by the baseband device in S302 does not carry the port information of the radio frequency device, in S304, the second transport network device may continue to send the second route probe frame to the radio frequency device, so that related information of the radio frequency device continues to be recorded. Optionally, when the source route probe frame sent by the baseband device in S302 carries the port information of the radio frequency device, after determining the second route probe frame, the second transport network device may not continue to send the second route probe frame to the radio frequency device, but perform S306, that is, return the second route probe frame to the baseband device.

In S305, the second transport network device sends the second route probe frame to the radio frequency device, where the second route probe frame includes the first port information and the second port information.

In S306, the second transport network device determines the second route probe frame as a destination route probe frame, where the destination route probe frame carries the first port information and the second port information; and the second transport network device returns the destination route probe frame to the baseband device by using the transport network again, so that the baseband device determines probe information according to the destination route probe frame.

In S307, after receiving the second route probe frame, the radio frequency device may add port information of the receive port of the radio frequency device to the second route probe frame, to obtain a destination route probe frame, where the receive port is connected to the output port of the second transport network device in the transport network, and the receive port of the radio frequency device is corresponding to the target port of the baseband device. The radio frequency device returns the determined destination route probe frame to the baseband device by using the transport network, so that the baseband device determines probe information according to the destination route probe frame.

In S308, baseband receives the destination route probe frame, where the destination route probe frame may be returned by the second transport network device in S306, or may be returned by the radio frequency device in S307; and the baseband device determines the probe information according to the destination route probe frame, where the probe information indicates that the target port of the baseband device is connected to the input port of the first transport network device, and that the output port of the second transport network device is connected to the receive port of the radio frequency device. The baseband device sends the probe information to the wireless element management system EMS, so that the wireless EMS determines the information about the topology among the baseband device, the transport network, and the radio frequency device according to the received probe information.

Optionally, the wireless EMS may receive multiple pieces of probe information, and the multiple pieces of probe information are specific to different baseband devices/different ports. In this case, the wireless EMS may determine information about an overall topology among the baseband device, the transport network, and the radio frequency device according to the multiple pieces of probe information.

It should be understood that sequence numbers of the foregoing processes do not mean execution sequences in the embodiments of the present invention. The execution sequences of the processes should be determined according to functions and internal logic of the processes, but should not constitute any limitation on the implementation processes of the embodiments of the present invention.

Therefore, according to the method for probing a fronthaul topology in this embodiment of the present invention, the baseband device sends, to the radio frequency device by using the transport network, the source route probe frame used to probe the path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain a fronthaul topology according to the probe result, determine information about a topology between a wireless device and a transport network device, and determine a connection relationship between ports of various devices.

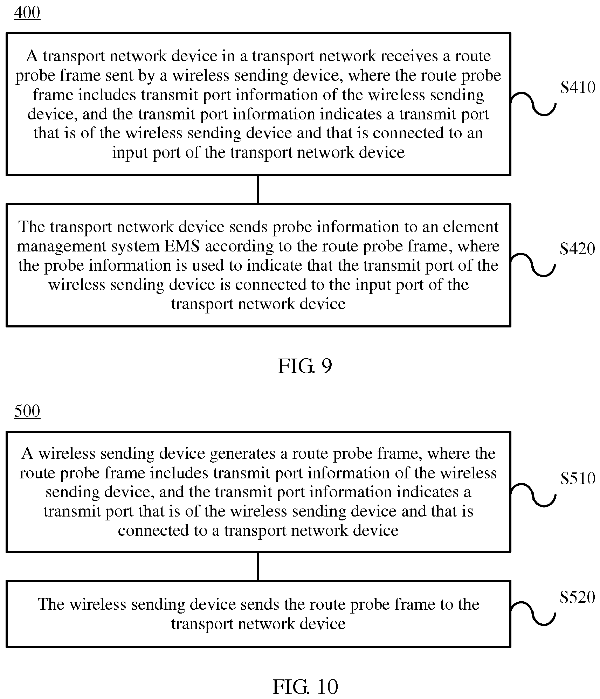

FIG. 9 shows a schematic flowchart of a method 400 for probing a fronthaul topology according to yet another embodiment of the present invention. The method 400 may be performed by a transport network device in a transport network. The method 400 may be referred to as an SFTSP (single-way FTSP). As shown in FIG. 9, the method 400 includes:
S410. A transport network device in a transport network receives a route probe frame sent by a wireless sending device, where the route probe frame includes transmit port information of the wireless sending device, and the transmit port information indicates a transmit port that is of the wireless sending device and that is connected to an input port of the transport network device.
S420. The transport network device sends probe information to an element management system EMS according to the route probe frame, where the probe information is used to indicate that the transmit port of the wireless sending device is connected to the input port of the transport network device.

Therefore, according to the method for probing a fronthaul topology in this embodiment of the present invention, a baseband device and/or a radio frequency device may send the route probe frame to the transport network device connected to the baseband device and/or the radio frequency device, where the route probe frame may include the port information of the transmit port of the baseband device and/or the radio frequency device; and the transport network device sends the probe information to the EMS according to the route probe frame, where the probe information indicates that the transmit port of the baseband device and/or the radio frequency device is connected to the input port of the transport network device, so that the EMS can quickly and accurately obtain a fronthaul topology according to the probe result, determine information about a topology between the wireless device and the transport network device, and determine a connection relationship between ports of various devices.

In S410, the transport network device in the transport network receives the route probe frame sent by the wireless sending device, where the route probe frame includes the transmit port information of the wireless sending device, and the transmit port information indicates the transmit port that is of the wireless sending device and that is connected to the input port of the transport network device. Specifically, if the wireless sending device is a baseband device, and a corresponding wireless receiving device is a radio frequency device, the transport network device that receives the route probe frame may be a first transport network device that is in the transport network and that is connected to the baseband device. For example, as shown in FIG. 2, the first transport network device is a transport network device 1. Similarly, if the wireless sending device is a radio frequency device, and a corresponding wireless receiving device is a baseband device, the transport network device that receives the route probe frame may be a second transport network device that is in the transport network and that is connected to the radio frequency device. For example, as shown in FIG. 2, the second transport network device is a transport network device 2.

An example in which the wireless sending device is the baseband device is used in the following for description. The first transport network device receives the route probe frame sent by the baseband device, where the route probe frame may include the port information of the transmit port of the baseband device. Optionally, the route probe frame may be defined in a vendor specific field of control words within one hyperframe (control words within one hyperframe) of the CPRI protocol. Selected subchannel number Ns and Xs are examples. Actually, the source route probe frame may be placed at any location of the vendor specific field. The present invention is not limited thereto.

Specifically, in this embodiment of the present invention, the route probe frame may include the port information of the baseband device. The port information of the baseband device indicates the transmit port of the baseband device. The transmit port may be any to-be-detected port of the baseband device. For example, as shown in FIG. 2, a baseband device 1 may include multiple ports, and the transmit port may be any port of the baseband device, for example, a port 5. The route probe frame may include port information that indicates the port 5 of the baseband device 1. Correspondingly, information about a topology between the port 5 and the radio frequency device may be obtained according to the route probe frame. As shown in FIG. 3, the route probe frame may be shown in FIG. 3, and the port information of the baseband device may be located in a probe field of the route probe frame. However, the present invention is not limited thereto.

Specifically, the port information of the baseband device may include a device identifier of the baseband device and a port number of the transmit port of the baseband device, where the transmit port may be determined according to the port information. Optionally, the port information of the baseband device may further include one or more of a device type of the baseband device, a subrack number of the transmit port, a cabinet number of the transmit port, a slot number of the transmit port, or a working status of the baseband device. The present invention is not limited thereto.

Optionally, in this embodiment of the present invention, the route probe frame may further include port information of the corresponding wireless receive end, that is, may include port information of the corresponding radio frequency device. The port information of the radio frequency device indicates a receive port that is of the radio frequency device and that is corresponding to the to-be-detected transmit port of the baseband device. For example, as shown in FIG. 2, the port 5 of the baseband device 1 is detected, that is, the transmit port is the port 5. A port corresponding to the transmit port may be a port 0 of a radio frequency device 1. The route probe device may include the port information that indicates the transmit port 5 of the baseband device, and may further include port information that indicates the port 0 of the radio frequency device 1, so that the device in the transport network may determine, according to the received route probe frame, the receive port that is of the radio frequency device and that is corresponding to the transmit port of the baseband device. As shown in FIG. 3, the route probe frame may be shown in FIG. 3, and the port information of the radio frequency device may be located in a Flag (flag) field. Alternatively, as shown in FIG. 4, the port information of the wireless sending device and the port information of the wireless receiving device are respectively located in a probe field 1 and a probe field 2. However, the present invention is not limited thereto.

Specifically, the port information of the radio frequency device may include a device identifier of the radio frequency device and a port number of the receive port of the radio frequency device, where the receive port of the radio frequency device may be determined according to the port information. Optionally, the port information of the radio frequency device may further include one or more of a device type of the radio frequency device, a subrack number of the receive port, a cabinet number of the receive port, a slot number of the receive port, or a working status of the radio frequency device. The present invention is not limited thereto.

In this embodiment of the present invention, when the wireless sending device is the baseband device, the first transport network device receives the route probe frame. The route probe frame includes the port information of the transmit port of the baseband device, and optionally, may further include the receive port information of the radio frequency device at a receive end. When the wireless sending device is the radio frequency device, the second transport network device receives the route probe frame. The route probe frame includes the port information of the transmit port of the radio frequency device, and optionally, may further include receive port information of the baseband device at a receive end.

In S420, the transport network device sends the probe information to the element management system EMS according to the route probe frame. The probe information is used to indicate that the transmit port of the wireless sending device is connected to the input port of the transport network device. Specifically, because the route probe frame includes the port information of the wireless transmit end, after receiving the route probe frame, the transport network device may send port information of the receive port of the transport network device and the port information of the wireless transmit end to the EMS, so that the EMS determines that the transmit port of the wireless sending device is connected to the input port of the transport network device. Optionally, when the route probe frame further includes the port information of the receive port of the wireless receiving device, the transport network device may also send the port information of the receive port of the wireless receiving device to the EMS, so that the EMS can determine information about a topology among the wireless transmit end, the transport network device, and the wireless receive end.

Specifically, the probe information may include the port information of the input port of the transport network device. As shown in FIG. 2, for example, if the wireless sending device is the baseband device 1, the corresponding transport network device that receives the route probe frame is a transport network device 1, and probe information sent by the transport network device 1 may include port information of a port 4 of the transport network device 1. Specifically, the port information may include a device identifier of the transport network device and a port number of an input port of the transport network device, that is, a port number of the port 4. Optionally, the port information may further include one or more of a device type of the transport network device, a number of a subrack in which the input port of the transport network device is located, a number of a cabinet in which the input port of the transport network device is located, a number of a slot in which the input port of the transport network device is located, or a working status of the transport network device. The present invention is not limited thereto.

In this embodiment of the present invention, the transport network device sends the probe information to the EMS. Optionally, the EMS may be a transport network EMS. The transport network EMS may determine the information about the topology among the wireless sending device, the transport network device, and the wireless receiving device according to the received probe information. Specifically, for example, if the probe information sent by the transport network device to the EMS includes the port information of the transmit port of the wireless sending device and the port information of the input port of the transport network device, the EMS may determine that the transmit port of the wireless sending device is connected to the input port of the transport network device. If the probe information further includes the information about the receive port of the wireless receiving device, the EMS may determine the information about the topology among the wireless sending device, the transport network device, and the wireless receiving device.

Specifically, for example, as shown in FIG. 2, the transport network EMS may determine, according to the probe information sent by the transport network device 1, that the port 5 of the baseband device 1 is connected to the port 4 of the transport network device 1, and may determine, according to probe information sent by the transport network device 2, that the port 0 of the radio frequency device 1 is connected to a port 7 of the transport network device 2. Then, the transport network EMS may learn a piece of topology information according to a fact that the port 5 of the baseband device 1 is corresponding to the port 0 of the radio frequency device 1, that is, a path from the port 5 of the baseband device 1 to the transport network device 1 via the port 4 of the transport network device 1, a path from the transport network device 1 to the transport network device 2 via the transport network, and finally, a path from the port 7 of the transport network device 2 to the port 0 of the radio frequency device 1. Optionally, the transport network EMS may learn, according to the probe information sent by the transport network device or according to stored data, that the port 5 of the baseband device 1 is corresponding to the port 0 of the radio frequency device 1. The present invention is not limited thereto.

In this embodiment of the present invention, the transport network EMS obtains the probe information, and may determine the topology information. The topology information may be stored in the transport network EMS, or the topology information may be sent to a wireless EMS. Optionally, the transport network EMS may send the probe information to a wireless EMS, and the wireless EMS determines the topology information. The present invention is not limited thereto.

Therefore, according to the method for probing a fronthaul topology in this embodiment of the present invention, the baseband device and/or the radio frequency device may send the route probe frame to the transport network device, where the route probe frame may include the port information of the baseband device and/or the radio frequency device, and the transmit port indicated by the port information is connected to the transport network device; and the transport network device sends the probe information to the EMS according to the route probe frame, where the probe information indicates that the transmit port of the baseband device and/or the radio frequency device is connected to the input port of the transport network device, so that the EMS can quickly and accurately obtain the fronthaul topology according to the probe result, determine the information about the topology between the wireless device and the transport network device, and determine the connection relationship between the ports of the various devices.

FIG. 10 shows a schematic flowchart of a method 500 for probing a fronthaul topology according to still yet another embodiment of the present invention. The method 500 may be performed by a baseband device and/or a radio frequency device. The method 500 may also be referred to as an SFTSP (single-way FTSP). As shown in FIG. 10, the method 500 includes:
S510. A wireless sending device generates a route probe frame, where the route probe frame includes transmit port information of the wireless sending device, and the transmit port information indicates a transmit port that is of the wireless sending device and that is connected to a transport network device.
S520. The wireless sending device sends the route probe frame to the transport network device.

Therefore, according to the method for probing a fronthaul topology in this embodiment of the present invention, the baseband device and/or the radio frequency device may send the route probe frame to the transport network device, where the route probe frame may include the port information of the baseband device and/or the radio frequency device, and the transmit port indicated by the port information is connected to the transport network device; and the transport network device sends probe information to an EMS according to the route probe frame, where the probe information indicates that the transmit port of the baseband device and/or the radio frequency device is connected to an input port of the transport network device, so that the EMS can quickly and accurately obtain a fronthaul topology according to the probe result, determine information about a topology between the wireless device and the transport network device, and determine a connection relationship between ports of various devices.

In S510, the wireless sending device generates the route probe frame. The route probe frame includes the transmit port information of the wireless sending device, and the transmit port information indicates the transmit port that is of the wireless sending device and that is connected to the transport network device. Optionally, the route probe may further include port information of a wireless receiving device corresponding to the wireless sending device. Specifically, if the wireless sending device is the baseband device, the corresponding wireless receiving device is the radio frequency device. For example, as shown in FIG. 2, a baseband device 1 is corresponding to a radio frequency device 1. Similarly, if the wireless sending device herein is the radio frequency device, the corresponding wireless receiving device is the baseband device. For example, as shown in FIG. 2, a radio frequency device 3 is corresponding to a baseband device 2.

An example in which the wireless sending device is the baseband device is used in the following for description. The generated route probe frame may include the port information of the transmit port of the baseband device. Optionally, the route probe frame may be defined in a vendor specific field of control words within one hyperframe (control words within one hyperframe) of the CPRI protocol. Selected subchannel number Ns and Xs are examples. Actually, the source route probe frame may be placed at any location of the vendor specific field. The present invention is not limited thereto.

Specifically, in this embodiment of the present invention, the route probe frame may include the port information of the baseband device. The port information of the baseband device indicates the transmit port of the baseband device. The transmit port may be any to-be-detected port of the baseband device. For example, as shown in FIG. 2, the baseband device 1 may include multiple ports, and the transmit port may be any port of the baseband device, for example, a port 5. The route probe frame may include port information that indicates the port 5 of the baseband device 1. Correspondingly, information about a topology between the port 5 and the radio frequency device may be obtained according to the route probe frame. As shown in FIG. 3, the route probe frame may be shown in FIG. 3, and the port information of the baseband device may be located in a probe field of the route probe frame. However, the present invention is not limited thereto.

Specifically, the port information of the baseband device may include a device identifier of the baseband device and a port number of the transmit port of the baseband device, where the transmit port may be determined according to the port information. Optionally, the port information of the baseband device may further include one or more of a device type of the baseband device, a subrack number of the transmit port, a cabinet number of the transmit port, a slot number of the transmit port, or a working status of the baseband device. The present invention is not limited thereto.

Optionally, in this embodiment of the present invention, the route probe frame may further include the port information of the corresponding wireless receive end, that is, may include the port information of the corresponding radio frequency device. The port information of the radio frequency device indicates a receive port that is of the radio frequency device and that is corresponding to the to-be-detected transmit port of the baseband device. For example, as shown in FIG. 2, the port 5 of the baseband device 1 is detected, that is, the transmit port is the port 5. A port corresponding to the transmit port may be a port 0 of the radio frequency device 1. The route probe device may include the port information that indicates the transmit port 5 of the baseband device, and may further include port information that indicates the port 0 of the radio frequency device 1, so that the device in a transport network may determine, according to the received route probe frame, the receive port that is of the radio frequency device and that is corresponding to the transmit port of the baseband device. As shown in FIG. 3, the route probe frame may be shown in FIG. 3, and the port information of the radio frequency device may be located in a Flag (flag) field. Alternatively, as shown in FIG. 4, the port information of the wireless sending device and the port information of the wireless receiving device are respectively located in a probe field 1 and a probe field 2. However, the present invention is not limited thereto.

Specifically, the port information of the radio frequency device may include a device identifier of the radio frequency device and a port number of the receive port of the radio frequency device, where the receive port of the radio frequency device may be determined according to the port information. Optionally, the port information of the radio frequency device may further include one or more of a device type of the radio frequency device, a subrack number of the receive port, a cabinet number of the receive port, a slot number of the receive port, or a working status of the radio frequency device. The present invention is not limited thereto.

In S520, the wireless sending devices sends the route probe frame to the transport network device, so that the transport network device determines the probe information according to the route probe frame, and sends the probe information to the EMS to determine the topology information. Specifically, when the wireless sending device is the baseband device, a first transport network device receives the route probe frame. The route probe frame includes the port information of the transmit port of the baseband device, and optionally, may further include the receive port information of the wireless receiving device, that is, the receive port information of the radio frequency device. When the wireless sending device is the radio frequency device, a second transport network device may receive the route probe frame. The route probe frame includes the port information of the transmit port of the radio frequency device, and optionally, may further include the receive port information of the wireless receiving device, that is, the receive port information of the baseband device.

In this embodiment of the present invention, the wireless sending device sends the route probe frame to the transport network. Optionally, a management tool of a base station, for example, a wireless EMS, may send indication information to the wireless sending device. The indication information is used to instruct the wireless sending device to send the route probe frame to the transport network. In this method, a fronthaul topology may be probed at any time, and the wireless EMS instructs, at any moment, the wireless sending device to perform probe. This method may be referred to as an MSFTSP (manual single-way FTSP). Optionally, the wireless sending device may be set to periodically send the route probe frame. For example, the baseband device and the radio frequency device may be set to send the route probe frame every five hours, to probe the fronthaul topology. This method may be referred to as an ASFTSP (automatic single-way FTSP). The present invention is not limited thereto.

It should be understood that sequence numbers of the foregoing processes do not mean execution sequences in the embodiments of the present invention. The execution sequences of the processes should be determined according to functions and internal logic of the processes, but should not constitute any limitation on the implementation processes of the embodiments of the present invention.

Therefore, according to the method for probing a fronthaul topology in this embodiment of the present invention, the baseband device and/or the radio frequency device may send the route probe frame to the transport network device, where the route probe frame may include the port information of the baseband device and/or the radio frequency device, and the transmit port indicated by the port information is connected to the transport network device; and the transport network device sends the probe information to the EMS according to the route probe frame, where the probe information indicates that the transmit port of the baseband device and/or the radio frequency device is connected to the input port of the transport network device, so that the EMS can quickly and accurately obtain the fronthaul topology according to the probe result, determine the information about the topology between the wireless device and the transport network device, and determine the connection relationship between the ports of the various devices.

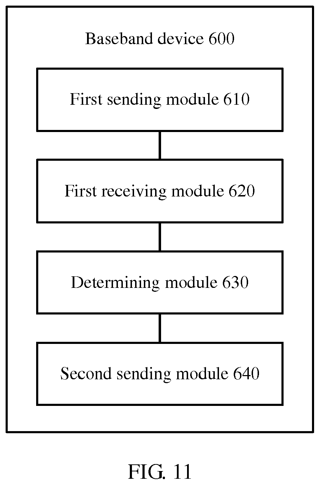

The foregoing has described in detail the method for probing a fronthaul topology according to the embodiments of the present invention with reference to FIG. 1 to FIG. 10. The following describes an apparatus for probing a fronthaul topology according to an embodiment of the present invention with reference to FIG. 11 to FIG. 18.

FIG. 11 shows a schematic block diagram of a baseband device according to an embodiment of the present invention. As shown in FIG. 11, the baseband device 600 according to this embodiment of the present invention includes:
a first sending module 610, configured to send a source route probe frame to a first transport network device in a transport network, where the source route probe frame is sent to a radio frequency device by using the transport network;
a first receiving module 620, configured to receive a destination route probe frame sent by the first transport network device, where the destination route probe frame is formed after the first transport network device records first port information in the source route probe frame and a second transport network device in the transport network records second port information in the source route probe frame, the first port information indicates an input port that is of the first transport network device and that is connected to a target port of the baseband device, and the second port information indicates an output port that is of the second transport network device and that is connected to a receive port of the radio frequency device;
a determining module 630, configured to determine probe information according to the destination route probe frame, where the probe information indicates that the target port of the baseband device is connected to the input port of the first transport network device, and that the output port of the second transport network device is connected to the receive port of the radio frequency device; and
a second sending module 640, configured to send the probe information to an element management system EMS.

Therefore, the baseband device in this embodiment of the present invention sends, to the radio frequency device by using the transport network, the source route probe frame used to probe a path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain a fronthaul topology according to the probe result, determine information about a topology between a wireless device and a transport network device, and determine a connection relationship between ports of various devices.

Optionally, in this embodiment of the present invention, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device.

Optionally, in this embodiment of the present invention, the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

Optionally, in this embodiment of the present invention, the probe information includes port information of the baseband device, the first port information, and the second port information. The port information of the baseband device indicates the target port of the baseband device.

Optionally, in this embodiment of the present invention, the probe result includes port information of the radio frequency device. The port information of the radio frequency device indicates the output port of the radio frequency device.

Optionally, in this embodiment of the present invention, the source route probe frame includes the port information of the baseband device. The port information of the baseband device indicates the target port of the baseband device.

Optionally, in this embodiment of the present invention, the source route probe frame further includes the port information of the radio frequency device. The port information of the radio frequency device indicates the output port of the radio frequency device.

Optionally, in this embodiment of the present invention, the destination route probe frame further includes the port information of the radio frequency device. The port information of the radio frequency device indicates the output port of the radio frequency device.

Optionally, in this embodiment of the present invention, the baseband device 600 may further include: a second receiving module, configured to receive an indication message sent by the EMS. The indication message is used to instruct the baseband device to send the source route probe frame.

It should be understood that the baseband device 600 according to this embodiment of the present invention may be correspondingly configured to perform the method 100 in the embodiments of the present invention; and the foregoing and other operations and/or functions of the modules of the baseband device 600 are separately used to implement corresponding procedures of the methods in FIG. 1 to FIG. 6. For brevity, details are not described herein again.

Therefore, the baseband device in this embodiment of the present invention sends, to the radio frequency device by using the transport network, the source route probe frame used to probe the path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain the fronthaul topology according to the probe result, determine the information about the topology between the wireless device and the transport network device, and determine the connection relationship between the ports of the various devices.

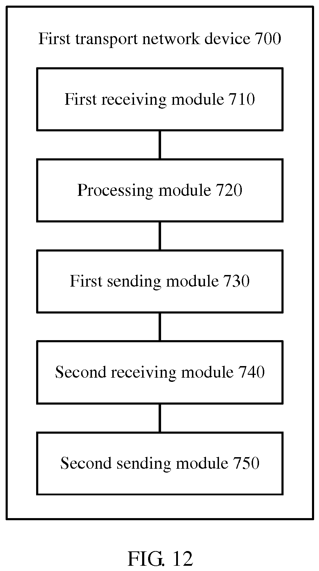

FIG. 12 shows a schematic block diagram of a first transport network device according to an embodiment of the present invention. As shown in FIG. 12, the first transport network device 700 in a transport network according to this embodiment of the present invention includes:
a first receiving module 710, configured to receive a source route probe frame sent by a baseband device, where the source route probe frame is sent to a radio frequency device by using the transport network;
a processing module 720, configured to record first port information in the source route probe frame, to obtain a first route probe frame, where the first port information indicates an input port that is of the first transport network device and that is connected to a target port of the baseband device;
a first sending module 730, configured to send the first route probe frame to a second transport network device in the transport network;
a second receiving module 740, configured to receive a destination route probe frame sent by the second transport network device, where the destination route probe frame is formed after the second transport network device records second port information in the first route probe frame, the destination route probe frame carries the first port information and the second port information, and the second port information indicates an output port that is of the second transport network device and that is connected to a receive port of the radio frequency device; and
a second sending module 750, configured to send the destination route probe frame to the baseband device.

Therefore, after receiving the source route probe frame sent by the baseband device, the first transport network device in the transport network in this embodiment of the present invention records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines probe result information according to the destination route probe frame and reports the probe result information to a wireless EMS, and the wireless EMS can quickly and accurately obtain a fronthaul topology according to the probe result, determine information about a topology between a wireless device and a transport network device, and determine a connection relationship between ports of various devices. In this way, fault detection can be easily performed on fronthaul parts by performing a loopback operation.

Optionally, in this embodiment of the present invention, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device.

Optionally, in this embodiment of the present invention, the second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

Optionally, in this embodiment of the present invention, the source route probe frame includes port information of the baseband device. The port information of the baseband device indicates the target port of the baseband device.

Optionally, in this embodiment of the present invention, the source route probe frame further includes port information of the radio frequency device. The port information of the radio frequency device indicates the receive port of the radio frequency device.

Optionally, in this embodiment of the present invention, the destination route probe frame carries port information of the radio frequency device. The port information of the radio frequency device indicates the receive port of the radio frequency device.

It should be understood that the first transport network device 700 according to this embodiment of the present invention may be correspondingly configured to perform the method 200 in the embodiments of the present invention; and the foregoing and other operations and/or functions of the modules of the first transport network device 700 are separately used to implement corresponding procedures of the methods in FIG. 7. For brevity, details are not described herein again.

Therefore, after receiving the source route probe frame sent by the baseband device, the first transport network device in the transport network in this embodiment of the present invention records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines probe result information according to the destination route probe frame and reports the probe result information to a wireless EMS, and the wireless EMS can quickly and accurately obtain a fronthaul topology according to the probe result, determine information about a topology between a wireless device and a transport network device, and determine a connection relationship between ports of various devices. In this way, fault detection can be easily performed on fronthaul parts by performing a loopback operation.

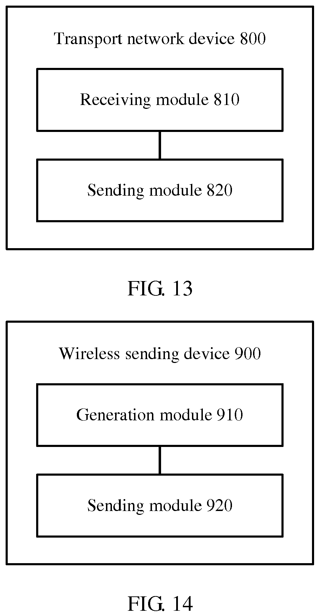

FIG. 13 shows a schematic block diagram of a transport network device according to an embodiment of the present invention. As shown in FIG. 13, the transport network device 800 according to this embodiment of the present invention includes:
a receiving module 810, configured to receive a route probe frame sent by a wireless sending device, where the route probe frame includes transmit port information of the wireless sending device, and the transmit port information indicates a transmit port that is of the wireless sending device and that is connected to an input port of the transport network device; and
a sending module 820, configured to send probe information to an element management system EMS according to the route probe frame, where the probe information is used to indicate that the transmit port of the wireless sending device is connected to the input port of the transport network device.

Therefore, the transport network device in a transport network in this embodiment of the present invention receives the route probe frame that is sent by a baseband device and/or a radio frequency device connected to the transport network device, where the route probe frame may include the port information of the transmit port of the baseband device and/or the radio frequency device; and the transport network device sends the probe information to the EMS according to the route probe frame, where the probe information indicates that the transmit port of the baseband device and/or the radio frequency device is connected to the input port of the transport network device, so that the EMS can quickly and accurately obtain a fronthaul topology according to the probe result, determine information about a topology between the wireless device and the transport network device, and determine a connection relationship between ports of various devices.

Optionally, in this embodiment of the present invention, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

Optionally, in this embodiment of the present invention, the probe information includes the transmit port information and input port information of the transport network device. The input port information indicates the input port of the transport network device.

Optionally, in this embodiment of the present invention, the input port information includes at least one of a device identifier of the transport network device, a device type, a number of a subrack in which the input port is located, a number of a cabinet in which the input port is located, a number of a slot in which the input port is located, a port number of the input port, or a working status of the transport network device.

Optionally, in this embodiment of the present invention, the route probe frame further includes receive port information of a wireless receiving device corresponding to the wireless sending device. The receive port information indicates the receive port of the wireless receiving device.

Optionally, in this embodiment of the present invention, the probe information includes the receive port information.

Optionally, in this embodiment of the present invention, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

Optionally, in this embodiment of the present invention, the wireless sending device is the baseband device, and the wireless receiving device is the radio frequency device; or the wireless sending device is the radio frequency device, and the wireless receiving device is the baseband device.

It should be understood that the transport network device 800 according to this embodiment of the present invention may be correspondingly configured to perform the method 400 in the embodiments of the present invention; and the foregoing and other operations and/or functions of the modules of the transport network device 800 are separately used to implement corresponding procedures of the methods in FIG. 9. For brevity, details are not described herein again.

Therefore, the transport network device in the transport network in this embodiment of the present invention receives the route probe frame that is sent by the baseband device and/or the radio frequency device connected to the transport network device, where the route probe frame may include the port information of the transmit port of the baseband device and/or the radio frequency device; and the transport network device sends the probe information to the EMS according to the route probe frame, where the probe information indicates that the transmit port of the baseband device and/or the radio frequency device is connected to the input port of the transport network device, so that the EMS can quickly and accurately obtain the fronthaul topology according to the probe result, determine the information about the topology between the wireless device and the transport network device, and determine the connection relationship between the ports of the various devices.

FIG. 14 shows a schematic block diagram of a wireless sending device according to an embodiment of the present invention. As shown in FIG. 14, the wireless sending device 900 according to this embodiment of the present invention includes:
a generation module 910, configured to generate a route probe frame, where the route probe frame includes transmit port information of the wireless sending device, and the transmit port information indicates a transmit port that is of the wireless sending device and that is connected to a transport network device; and
a sending module 920, configured to send the route probe frame to the transport network device.

Therefore, the wireless sending device in this embodiment of the present invention sends the route probe frame to the transport network device, where the route probe frame may include the port information of the wireless sending device, and the transmit port indicated by the port information is connected to the transport network device; the transport network device sends probe information to an EMS according to the route probe frame, where the probe information indicates that the transmit port of the wireless sending device is connected to an input port of the transport network device, so that the EMS can quickly and accurately obtain a fronthaul topology according to the probe result, determine information about a topology between the wireless device and the transport network device, and determine a connection relationship between ports of various devices.

Optionally, in this embodiment of the present invention, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

Optionally, in this embodiment of the present invention, the route probe frame further includes receive port information of a wireless receiving device corresponding to the wireless sending device. The receive port information indicates a receive port of the wireless receiving device.

Optionally, in this embodiment of the present invention, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

Optionally, in this embodiment of the present invention, the wireless sending device further includes: a receiving module, configured to receive indication information sent by an element management system EMS, where the indication information is used to instruct the baseband device to send the route probe frame.

Optionally, in this embodiment of the present invention, the wireless sending device is a baseband device, and the wireless receiving device is a radio frequency device; or the wireless sending device is a radio frequency device, and the wireless receiving device is a baseband device.

It should be understood that the wireless sending device 900 according to this embodiment of the present invention may be correspondingly configured to perform the method 500 in the embodiments of the present invention; and the foregoing and other operations and/or functions of the modules of the wireless sending device 900 are separately used to implement corresponding procedures of the methods in FIG. 10. For brevity, details are not described herein again.

Therefore, the wireless sending device in this embodiment of the present invention sends the route probe frame to the transport network device, where the route probe frame may include the port information of the wireless sending device, and the transmit port indicated by the port information is connected to the transport network device; and the transport network device sends the probe information to the EMS according to the route probe frame, where the probe information indicates that the transmit port of the wireless sending device is connected to the input port of the transport network device, so that the EMS can quickly and accurately obtain the fronthaul topology according to the probe result, determine the information about the topology between the wireless device and the transport network device, and determine the connection relationship between the ports of the various devices.

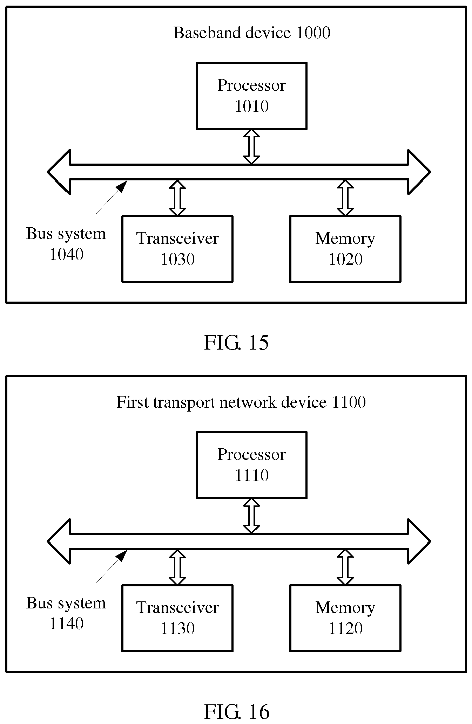

As shown in FIG. 15, an embodiment of the present invention further provides a baseband device 1000. The baseband device 1000 includes a processor 1010, a memory 1020, a transceiver 1030, and a bus system 1040. The processor 1010, the memory 1020, and the transceiver 1030 are connected by using the bus system 1040. The memory 1020 is configured to store an instruction. The processor 1010 is configured to execute the instruction stored in the memory 1020, so as to control the transceiver 1030 to receive and transmit signals. The processor 1010 is configured to send a source route probe frame to a first transport network device in a transport network, where the source route probe frame is sent to a radio frequency device by using the transport network. The transceiver 1030 is configured to receive a destination route probe frame sent by the first transport network device. The destination route probe frame is formed after the first transport network device records first port information in the source route probe frame and a second transport network device in the transport network records second port information in the source route probe frame. The first port information indicates an input port that is of the first transport network device and that is connected to a target port of the baseband device. The second port information indicates an output port that is of the second transport network device and that is connected to a receive port of the radio frequency device. The processor 1010 is configured to determine probe information according to the destination route probe frame. The probe information indicates that the target port of the baseband device is connected to the input port of the first transport network device, and that the output port of the second transport network device is connected to the receive port of the radio frequency device. The transceiver 1030 is configured to send the probe information to an element management system EMS.

Therefore, the baseband device in this embodiment of the present invention sends, to the radio frequency device by using the transport network, the source route probe frame used to probe a path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain a fronthaul topology according to the probe result, determine information about a topology between a wireless device and a transport network device, and determine a connection relationship between ports of various devices.

It should be understood that, in this embodiment of the present invention, the processor 1010 may be a central processing unit (Central Processing Unit, "CPU" for short), or the processor 1010 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 1020 may include a read-only memory and a random access memory, and provides the instruction and data to the processor 1010. A part of the memory 1020 may further include a nonvolatile random access memory. For example, the memory 1020 may further store device type information.

In addition to a data bus, the bus system 1040 may further include a power bus, a control bus, a status signal bus, and the like. However, for clarity of description, various types of buses are marked as the bus system 1040 in the figure.

In an implementation process, steps of the foregoing methods may be completed by using an integrated logic circuit of hardware in the processor 1010 or an instruction in a form of software. The steps of the methods disclosed with reference to the embodiments of the present invention may be directly performed and completed by a hardware processor, or performed and completed by a combination of hardware and software modules in a processor. The software module may be located in a mature storage medium in the field, such as a random access memory, a flash memory, a read-only memory, a programmable read-only memory, an electrically erasable programmable memory, or a register. The storage medium is located in the memory 1020. The processor 1010 reads information in the memory 1020, and completes the steps of the foregoing methods in combination with hardware of the processor 1010. To avoid repetition, details are not described herein again.

Optionally, in an embodiment, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device. The second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

Optionally, in an embodiment, the probe information includes port information of the baseband device, the first port information, and the second port information. The port information of the baseband device indicates the target port of the baseband device.

Optionally, in an embodiment, the probe result includes port information of the radio frequency device. The port information of the radio frequency device indicates the output port of the radio frequency device.

Optionally, in an embodiment, the source route probe frame includes the port information of the baseband device. The port information of the baseband device indicates the target port of the baseband device.

Optionally, in an embodiment, the source route probe frame further includes the port information of the radio frequency device. The port information of the radio frequency device indicates the output port of the radio frequency device.

Optionally, in an embodiment, the destination route probe frame further includes the port information of the radio frequency device. The port information of the radio frequency device indicates the output port of the radio frequency device.

Optionally, in an embodiment, the transceiver 1030 is further configured to receive an indication message sent by the EMS. The indication message is used to instruct the baseband device to send the source route probe frame.

It should be understood that the baseband device 1000 according to this embodiment of the present invention may be corresponding to the baseband device 600 in the embodiments of the present invention, and may be corresponding to a corresponding execution body that performs the method 100 according to the embodiments of the present invention; and the foregoing and other operations and/or functions of the modules of the baseband device 1000 are separately used to implement corresponding procedures of the methods in FIG. 1. For brevity, details are not described herein again.

Therefore, the baseband device in this embodiment of the present invention sends, to the radio frequency device by using the transport network, the source route probe frame used to probe the path, so that the transport network devices that receive the source route probe frame record the port information in the source route probe frame, to obtain the destination route probe frame, where the port information includes the port information of the input port that is in the transport network and that is connected to the baseband device and the port information of the output port that is in the transport network and that is connected to the radio frequency device; finally, the destination route probe frame in which the port information of the transport network is recorded is returned to the baseband device; and the baseband device determines the probe result information according to the destination route probe frame and reports the probe result information to the wireless EMS, so that the wireless EMS can quickly and accurately obtain the fronthaul topology according to the probe result, determine the information about the topology between the wireless device and the transport network device, and determine the connection relationship between the ports of the various devices.

As shown in FIG. 16, an embodiment of the present invention further provides a first transport network device 1100. The first transport network device 1100 includes a processor 1110, a memory 1120, a transceiver 1130, and a bus system 1140. The processor 1110, the memory 1120, and the transceiver 1130 are connected by using the bus system 1140. The memory 1120 is configured to store an instruction. The processor 1110 is configured to execute the instruction stored in the memory 1120, so as to control the transceiver 1130 to receive and transmit signals. The transceiver 1130 is configured to receive a source route probe frame sent by a baseband device, where the source route probe frame is sent to a radio frequency device by using the transport network. The processor 1110 is configured to record first port information in the source route probe frame, to obtain a first route probe frame, where the first port information indicates an input port that is of the first transport network device and that is connected to a target port of the baseband device. The transceiver 1130 is configured to: send the first route probe frame to a second transport network device in the transport network; receive a destination route probe frame sent by the second transport network device, where destination route probe frame is formed after the second transport network device records second port information in the first route probe frame, the destination route probe frame carries the first port information and the second port information, and the second port information indicates an output port that is of the second transport network device and that is connected to a receive port of the radio frequency device; and send the destination route probe frame to the baseband device.

Therefore, after receiving the source route probe frame sent by the baseband device, the first transport network device in the transport network in this embodiment of the present invention records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines probe result information according to the destination route probe frame and reports the probe result information to a wireless EMS, and the wireless EMS can quickly and accurately obtain a fronthaul topology according to the probe result, determine information about a topology between a wireless device and a transport network device, and determine a connection relationship between ports of various devices. In this way, fault detection can be easily performed on fronthaul parts by performing a loopback operation.

It should be understood that, in this embodiment of the present invention, the processor 1110 may be a central processing unit (Central Processing Unit, "CPU" for short), or the processor 1110 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 1120 may include a read-only memory and a random access memory, and provides the instruction and data to the processor 1110. A part of the memory 1120 may further include a nonvolatile random access memory. For example, the memory 1120 may further store device type information.

In addition to a data bus, the bus system 1140 may further include a power bus, a control bus, a status signal bus, and the like. However, for clarity of description, various types of buses are marked as the bus system 1140 in the figure.

In an implementation process, steps of the foregoing methods may be completed by using an integrated logic circuit of hardware in the processor 1110 or an instruction in a form of software. The steps of the methods disclosed with reference to the embodiments of the present invention may be directly performed and completed by a hardware processor, or performed and completed by a combination of hardware and software modules in a processor. The software module may be located in a mature storage medium in the field, such as a random access memory, a flash memory, a read-only memory, a programmable read-only memory, an electrically erasable programmable memory, or a register. The storage medium is located in the memory 1120. The processor 1110 reads information in the memory 1120, and completes the steps of the foregoing methods in combination with hardware of the processor 1110. To avoid repetition, details are not described herein again.

Optionally, in an embodiment, the first port information includes at least one of a device identifier of the first transport network device, a device type, a number of a subrack in which the input port is located, a number of a cabinet in which the input port is located, a number of a slot in which the input port is located, a port number of the input port, or a working status of the first transport network device. The second port information includes at least one of a device identifier of the second transport network device, a device type, a number of a subrack in which the output port is located, a number of a cabinet in which the output port is located, a number of a slot in which the output port is located, a port number of the output port, or a working status of the second transport network device.

Optionally, in an embodiment, the source route probe frame includes port information of the baseband device. The port information of the baseband device indicates the target port of the baseband device.

Optionally, in an embodiment, the source route probe frame further includes port information of the radio frequency device. The port information of the radio frequency device indicates the receive port of the radio frequency device.

Optionally, in an embodiment, the destination route probe frame carries port information of the radio frequency device. The port information of the radio frequency device indicates the receive port of the radio frequency device.

It should be understood that the first transport network device 1100 according to this embodiment of the present invention may be corresponding to the first transport network device 700 in the embodiments of the present invention, and may be corresponding to a corresponding execution body that performs the method 200 according to the embodiments of the present invention; and the foregoing and other operations and/or functions of the modules of the first transport network device 1100 are separately used to implement corresponding procedures of the methods in FIG. 7. For brevity, details are not described herein again.

Therefore, after receiving the source route probe frame sent by the baseband device, the first transport network device in the transport network in this embodiment of the present invention records the first port information in the source route probe frame, to obtain the first route probe frame, where the first port information indicates the input port that is of the first transport network device and that is connected to the target port of the baseband device; the first transport network device sends the determined first route probe frame to the second transport network device, where the second transport network device is connected to the radio frequency device; the first transport network device receives the destination route probe frame sent by the second transport network device, where the destination route probe frame is formed after the second transport network device adds the second port information to the first route probe frame, and the second port information indicates the output port that is of the second transport network device and that is connected to the receive port of the radio frequency device; and the first transport network device sends the destination route probe frame to the baseband device, so that the baseband device determines probe result information according to the destination route probe frame and reports the probe result information to a wireless EMS, and the wireless EMS can quickly and accurately obtain a fronthaul topology according to the probe result, determine information about a topology between a wireless device and a transport network device, and determine a connection relationship between ports of various devices. In this way, fault detection can be easily performed on fronthaul parts by performing a loopback operation.

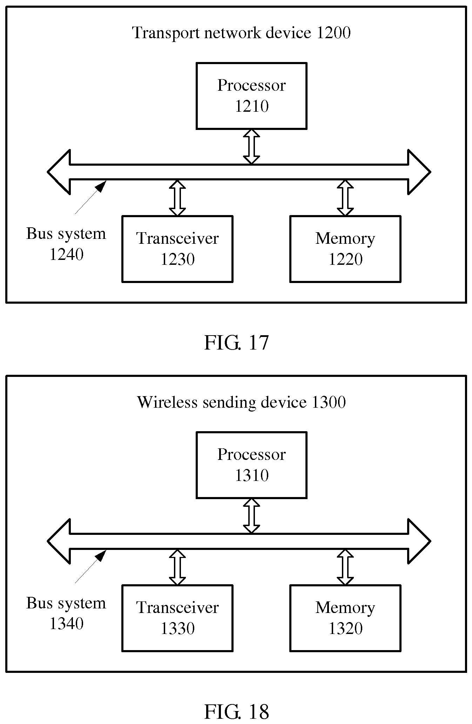

As shown in FIG. 17, an embodiment of the present invention further provides a transport network device 1200. The transport network device 1200 includes a processor 1210, a memory 1220, a transceiver 1230, and a bus system 1240. The processor 1210, the memory 1220, and the transceiver 1230 are connected by using the bus system 1240. The memory 1220 is configured to store an instruction. The processor 1210 is configured to execute the instruction stored in the memory 1220, so as to control the transceiver 1230 to receive and transmit signals. The transceiver 1230 is configured to: receive a route probe frame sent by a wireless sending device, where the route probe frame includes transmit port information of the wireless sending device, the transmit port information indicates a transmit port that is of the wireless sending device and that is connected to an input port of the transport network device; and send probe information to an element management system EMS according to the route probe frame, where the probe information is used to indicate that the transmit port of the wireless sending device is connected to the input port of the transport network device.

Therefore, the transport network device in a transport network in this embodiment of the present invention receives the route probe frame that is sent by a baseband device and/or a radio frequency device connected to the transport network device, where the route probe frame may include the port information of the transmit port of the baseband device and/or the radio frequency device; and the transport network device sends the probe information to the EMS according to the route probe frame, where the probe information indicates that the transmit port of the baseband device and/or the radio frequency device is connected to the input port of the transport network device, so that the EMS can quickly and accurately obtain a fronthaul topology according to the probe result, determine information about a topology between the wireless device and the transport network device, and determine a connection relationship between ports of various devices.

It should be understood that, in this embodiment of the present invention, the processor 1210 may be a central processing unit (Central Processing Unit, "CPU" for short), or the processor 1210 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 1220 may include a read-only memory and a random access memory, and provides the instruction and data to the processor 1210. A part of the memory 1220 may further include a nonvolatile random access memory. For example, the memory 1220 may further store device type information.

In addition to a data bus, the bus system 1240 may further include a power bus, a control bus, a status signal bus, and the like. However, for clarity of description, various types of buses are marked as the bus system 1240 in the figure.

In an implementation process, steps of the foregoing methods may be completed by using an integrated logic circuit of hardware in the processor 1210 or an instruction in a form of software. The steps of the methods disclosed with reference to the embodiments of the present invention may be directly performed and completed by a hardware processor, or performed and completed by a combination of hardware and software modules in a processor. The software module may be located in a mature storage medium in the field, such as a random access memory, a flash memory, a read-only memory, a programmable read-only memory, an electrically erasable programmable memory, or a register. The storage medium is located in the memory 1220. The processor 1210 reads information in the memory 1220, and completes the steps of the foregoing methods in combination with hardware of the processor 1210. To avoid repetition, details are not described herein again.

Optionally, in an embodiment, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

Optionally, in an embodiment, the probe information includes the transmit port information and input port information of the transport network device. The input port information indicates the input port of the transport network device.

Optionally, in an embodiment, the input port information includes at least one of a device identifier of the transport network device, a device type, a number of a subrack in which the input port is located, a number of a cabinet in which the input port is located, a number of a slot in which the input port is located, a port number of the input port, or a working status of the transport network device.

Optionally, in an embodiment, the route probe frame further includes receive port information of a wireless receiving device corresponding to the wireless sending device. The receive port information indicates the receive port of the wireless receiving device.

Optionally, in an embodiment, the probe information includes the receive port information.

Optionally, in an embodiment, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

Optionally, in an embodiment, the wireless sending device is the baseband device, and the wireless receiving device is the radio frequency device; or the wireless sending device is the radio frequency device, and the wireless receiving device is the baseband device.

It should be understood that the transport network device 1200 according to this embodiment of the present invention may be corresponding to the transport network device 800 in the embodiments of the present invention, and may be corresponding to a corresponding execution body that performs the method 400 according to the embodiments of the present invention; and the foregoing and other operations and/or functions of the modules of the transport network device 1200 are separately used to implement corresponding procedures of the methods in FIG. 9. For brevity, details are not described herein again.

Therefore, the transport network device in the transport network in this embodiment of the present invention receives the route probe frame that is sent by the baseband device and/or the radio frequency device connected to the transport network device, where the route probe frame may include the port information of the transmit port of the baseband device and/or the radio frequency device; and the transport network device sends the probe information to the EMS according to the route probe frame, where the probe information indicates that the transmit port of the baseband device and/or the radio frequency device is connected to the input port of the transport network device, so that the EMS can quickly and accurately obtain the fronthaul topology according to the probe result, determine the information about the topology between the wireless device and the transport network device, and determine the connection relationship between the ports of the various devices.

As shown in FIG. 18, an embodiment of the present invention further provides a wireless sending device 1300. The wireless sending device 1300 includes a processor 1310, a memory 1320, a transceiver 1330, and a bus system 1340. The processor 1310, the memory 1320, and the transceiver 1330 are connected by using the bus system 1340. The memory 1320 is configured to store an instruction. The processor 1310 is configured to execute the instruction stored in the memory 1320, so as to control the transceiver 1330 to receive and transmit signals. The processor 1310 is configured to generate a route probe frame, where the route probe frame includes transmit port information of the wireless sending device, and the transmit port information indicates a transmit port that is of the wireless sending device and that is connected to a transport network device. The transceiver 1330 is configured to send the route probe frame to the transport network device.

Therefore, the wireless sending device in this embodiment of the present invention sends the route probe frame to the transport network device, where the route probe frame may include the port information of the wireless sending device, and the transmit port indicated by the port information is connected to the transport network device; and the transport network device sends probe information to an EMS according to the route probe frame, where the probe information indicates that the transmit port of the wireless sending device is connected to an input port of the transport network device, so that the EMS can quickly and accurately obtain a fronthaul topology according to the probe result, determine information about a topology between the wireless device and the transport network device, and determine a connection relationship between ports of various devices.

It should be understood that, in this embodiment of the present invention, the processor 1310 may be a central processing unit (Central Processing Unit, "CPU" for short), or the processor 1310 may be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor, or the like.

The memory 1320 may include a read-only memory and a random access memory, and provides the instruction and data to the processor 1310. A part of the memory 1320 may further include a nonvolatile random access memory. For example, the memory 1320 may further store device type information.

In addition to a data bus, the bus system 1340 may further include a power bus, a control bus, a status signal bus, and the like. However, for clarity of description, various types of buses are marked as the bus system 1340 in the figure.

In an implementation process, steps of the foregoing methods may be completed by using an integrated logic circuit of hardware in the processor 1310 or an instruction in a form of software. The steps of the methods disclosed with reference to the embodiments of the present invention may be directly performed and completed by a hardware processor, or performed and completed by a combination of hardware and software modules in a processor. The software module may be located in a mature storage medium in the field, such as a random access memory, a flash memory, a read-only memory, a programmable read-only memory, an electrically erasable programmable memory, or a register. The storage medium is located in the memory 1320. The processor 1310 reads information in the memory 1320, and completes the steps of the foregoing methods in combination with hardware of the processor 1310. To avoid repetition, details are not described herein again.

Optionally, in an embodiment, the transmit port information includes at least one of a device identifier of the wireless sending device, a device type, a number of a subrack in which the transmit port is located, a number of a cabinet in which the transmit port is located, a number of a slot in which the transmit port is located, a port number of the transmit port, or a working status of the wireless sending device.

Optionally, in an embodiment, the route probe frame further includes receive port information of a wireless receiving device corresponding to the wireless sending device. The receive port information indicates a receive port of the wireless receiving device.

Optionally, in an embodiment, the receive port information includes at least one of a device identifier of the wireless receiving device, a device type, a number of a subrack in which the receive port is located, a number of a cabinet in which the receive port is located, a number of a slot in which the receive port is located, a port number of the receive port, or a working status of the wireless receiving device.

Optionally, in an embodiment, the transceiver 1330 is further configured to receive indication information sent by an element management system EMS, where the indication information is used to instruct the baseband device to send the route probe frame.

Optionally, in an embodiment, the wireless sending device is a baseband device, and the wireless receiving device is a radio frequency device; or the wireless sending device is a radio frequency device, and the wireless receiving device is a baseband device.

It should be understood that the wireless sending device 1300 according to this embodiment of the present invention may be corresponding to the wireless sending device 900 in the embodiments of the present invention, and may be corresponding to a corresponding execution body that performs the method 500 according to the embodiments of the present invention; and the foregoing and other operations and/or functions of the modules of the wireless sending device 1300 are separately used to implement corresponding procedures of the methods in FIG. 10. For brevity, details are not described herein again.

Therefore, the wireless sending device in this embodiment of the present invention sends the route probe frame to the transport network device, where the route probe frame may include the port information of the wireless sending device, and the transmit port indicated by the port information is connected to the transport network device; and the transport network device sends the probe information to the EMS according to the route probe frame, where the probe information indicates that the transmit port of the wireless sending device is connected to the input port of the transport network device, so that the EMS can quickly and accurately obtain the fronthaul topology according to the probe result, determine the information about the topology between the wireless device and the transport network device, and determine the connection relationship between the ports of the various devices.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may be or may not be physically separate, and parts displayed as units may be or may not be physical units, and may be located in one position, or may be distributed on multiple network units. Some or all of the units may be selected according to actual requirements to achieve the objectives of the solutions of the embodiments.

In addition, functional units in the embodiments of the present invention may be integrated into one processing unit, or each of the units may exist alone physically, or at least two units may be integrated into one unit.

When the functions are implemented in the form of a software functional unit and sold or used as an independent product, the functions may be stored in a computer readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for probing a fronthaul topology, comprising:
sending (110), by a baseband device, a source route probe frame to a first transport network device in a transport network, wherein the source route probe frame is sent to a radio frequency device by using the transport network;
receiving (120), by the baseband device, a destination route probe frame sent by the first transport network device, wherein the destination route probe frame is formed after the first transport network device records first port information in the source route probe frame and a second transport network device in the transport network records second port information in the source route probe frame, the first port information indicates an input port (4, 3) that is of the first transport network device and that is connected to a target port (5, 8) of the baseband device, and the second port information indicates an output port (7, 5) that is of the second transport network device and that is connected to a receive port (0, 1) of the radio frequency device;
determining (130), by the baseband device, probe information according to the destination route probe frame, wherein the probe information indicates that the target port (5, 8) of the baseband device is connected to the input port (4, 3) of the first transport network device, and that the output port (7, 5) of the second transport network device is connected to the receive port (0, 1) of the radio frequency device; and
sending (140), by the baseband device, the probe information to an element management system, EMS.

2. The method according to claim 1, wherein:
the first port information comprises at least one of a device identifier of the first transport network device, a device type, a number of a subrack in which the input port is located, a number of a cabinet in which the input port is located, a number of a slot in which the input port is located, a port number of the input port, or a working status of the first transport network device; and
the second port information comprises at least one of a device identifier of the second transport network device, a device type, a number of a subrack in which the output port is located, a number of a cabinet in which the output port is located, a number of a slot in which the output port is located, a port number of the output port, or a working status of the second transport network device.

3. The method according to claim 1 or 2, wherein:
the probe information comprises port information of the baseband device, the first port information, and the second port information, and the port information of the baseband device indicates the target port of the baseband device.

4. The method according to claim 3, wherein:
the probe information comprises port information of the radio frequency device, and the port information of the radio frequency device indicates the receive port of the radio frequency device.

5. The method according to any one of claims 1 to 4, wherein:
the source route probe frame comprises the port information of the baseband device, and the port information of the baseband device indicates the target port of the baseband device.

6. A baseband device, comprising:
a first sending module (610), configured to send a source route probe frame to a first transport network device in a transport network, wherein the source route probe frame is sent to a radio frequency device by using the transport network;
a first receiving module (620), configured to receive a destination route probe frame sent by the first transport network device, wherein the destination route probe frame is formed after the first transport network device records first port information in the source route probe frame and a second transport network device in the transport network records second port information in the source route probe frame, the first port information indicates an input port (4, 3) that is of the first transport network device and that is connected to a target port (5, 8) of the baseband device, and the second port information indicates an output port (7, 5) that is of the second transport network device and that is connected to a receive port (0, 1) of the radio frequency device;
a determining module (630), configured to determine probe information according to the destination route probe frame, wherein the probe information indicates that the target port (5, 8) of the baseband device is connected to the input port (4, 3) of the first transport network device, and that the output port (7, 5) of the second transport network device is connected to the receive port (0, 1) of the radio frequency device; and
a second sending module (640), configured to send the probe information to an element management system, EMS.

7. The baseband device according to claim 6, wherein:
the first port information comprises at least one of a device identifier of the first transport network device, a device type, a number of a subrack in which the input port is located, a number of a cabinet in which the input port is located, a number of a slot in which the input port is located, a port number of the input port, or a working status of the first transport network device; and
the second port information comprises at least one of a device identifier of the second transport network device, a device type, a number of a subrack in which the output port is located, a number of a cabinet in which the output port is located, a number of a slot in which the output port is located, a port number of the output port, or a working status of the second transport network device.

8. The baseband device according to claim 6 or 7, wherein:
the probe information comprises port information of the baseband device, the first port information, and the second port information, and the port information of the baseband device indicates the target port of the baseband device.

9. The baseband device according to claim 8, wherein:
the probe information comprises port information of the radio frequency device, and the port information of the radio frequency device indicates the receive port of the radio frequency device.

10. The baseband device according to any one of claims 6 to 9, wherein:
the source route probe frame comprises the port information of the baseband device, and the port information of the baseband device indicates the target port of the baseband device.

11. A first transport network device in a transport network, comprising:
a first receiving module (710), configured to receive a source route probe frame sent by a baseband device, wherein the source route probe frame is sent to a radio frequency device by using the transport network;
a processing module (720), configured to record first port information in the source route probe frame, to obtain a first route probe frame, wherein the first port information indicates an input port (4, 3) that is of the first transport network device and that is connected to a target port (5, 8) of the baseband device;
a first sending module (730), configured to send the first route probe frame to a second transport network device in the transport network;
a second receiving module (740), configured to receive a destination route probe frame sent by the second transport network device, wherein the destination route probe frame is formed after the second transport network device records second port information in the first route probe frame, the destination route probe frame carries the first port information and the second port information, and the second port information indicates an output port (7, 5) that is of the second transport network device and that is connected to a receive port (0, 1) of the radio frequency device; and
a second sending module (750), configured to send the destination route probe frame to the baseband device.

12. The first transport network device according to claim 11, wherein:
the first port information comprises at least one of a device identifier of the first transport network device, a device type, a number of a subrack in which the input port is located, a number of a cabinet in which the input port is located, a number of a slot in which the input port is located, a port number of the input port, or a working status of the first transport network device; and
the second port information comprises at least one of a device identifier of the second transport network device, a device type, a number of a subrack in which the output port is located, a number of a cabinet in which the output port is located, a number of a slot in which the output port is located, a port number of the output port, or a working status of the second transport network device.

13. The first transport network device according to claim 11 or 12, wherein:
the source route probe frame comprises port information of the baseband device, and the port information of the baseband device indicates the target port of the baseband device.

14. The first transport network device according to claim 13, wherein:
the source route probe frame further comprises port information of the radio frequency device, and the port information of the radio frequency device indicates the receive port of the radio frequency device.

15. The first transport network device according to any one of claims 11 to 13, wherein:
the destination route probe frame carries port information of the radio frequency device, and the port information of the radio frequency device indicates the receive port of the radio frequency device.

## Patentansprüche

1. Verfahren zum Testen einer Fronthaul-Topologie, umfassend:
Senden (110) eines Source-Route-Testrahmens zu einer ersten Transportnetzwerkvorrichtung in einem Transportnetzwerk durch eine Basisbandvorrichtung, wobei der Source-Route-Testrahmen unter Verwendung des Transportnetzwerks zu einer Funkfrequenzvorrichtung gesendet wird;
Empfangen (120) eines Destination-Route-Testrahmens, der von der ersten Transportnetzwerkvorrichtung gesendet wird, durch die Basisbandvorrichtung, wobei der Destination-Route-Testrahmen gebildet wird, nachdem die erste Transportnetzwerkvorrichtung erste Portinformationen in dem Source-Route-Testrahmen festhält und eine zweite Transportnetzwerkvorrichtung in dem Transportnetzwerk zweite Portinformationen in dem Source-Route-Testrahmen festhält, die ersten Portinformationen einen Eingangsport (4, 3) anzeigen, der zu der ersten Transportnetzwerkvorrichtung gehört und der mit einem Zielport (5, 8) der Basisbandvorrichtung verbunden ist, und die zweiten Portinformationen einen Ausgangsport (7, 5) anzeigen, der zu der zweiten Transportnetzwerkvorrichtung gehört und der mit einem Empfangsport (0, 1) der Funkfrequenzvorrichtung verbunden ist;
Bestimmen (130) von Testinformationen gemäß dem Destination-Route-Testrahmen durch die Basisbandvorrichtung, wobei die Testinformationen anzeigen, dass der Zielport (5, 8) der Basisbandvorrichtung mit dem Eingangsport (4, 3) der ersten Transportnetzwerkvorrichtung verbunden ist, und dass der Ausgangsport (7, 5) der zweiten Transportnetzwerkvorrichtung mit dem Empfangsport (0, 1) der Funkfrequenzvorrichtung verbunden ist; und
Senden (140) der Testinformationen zu einem Elementverwaltungssystem, EMS, durch die Basisbandvorrichtung.

2. Verfahren nach Anspruch 1, wobei:
die ersten Portinformationen mindestens eines von einer Vorrichtungskennung der ersten Transportnetzwerkvorrichtung, einem Vorrichtungstyp, einer Nummer eines Baugruppenträgers, in dem sich der Eingangsport befindet, einer Nummer eines Gehäuses, in dem sich der Eingangsport befindet, einer Nummer eines Steckplatzes, in dem sich der Eingangsport befindet, einer Portnummer des Eingangsports, oder einem Arbeitsstatus der ersten Transportnetzwerkvorrichtung umfassen; und
die zweiten Portinformationen mindestens eines von einer Vorrichtungskennung der zweiten Transportnetzwerkvorrichtung, einem Vorrichtungstyp, einer Nummer eines Baugruppenträgers, in dem sich der Ausgangsport befindet, einer Nummer eines Gehäuses, in dem sich der Ausgangsport befindet, einer Nummer eines Steckplatzes, in dem sich der Ausgangsport befindet, einer Portnummer des Ausgangsports, oder einem Arbeitsstatus der zweiten Transportnetzwerkvorrichtung umfassen.

3. Verfahren nach Anspruch 1 oder 2, wobei:
die Testinformationen Portinformationen der Basisbandvorrichtung umfassen, wobei die ersten Portinformationen, und die zweiten Portinformationen, und die Portinformationen der Basisbandvorrichtung den Zielport der Basisbandvorrichtung anzeigen.

4. Verfahren nach Anspruch 3, wobei:
die Testinformationen Portinformationen der Funkfrequenzvorrichtung umfassen, und die Portinformationen der Funkfrequenzvorrichtung den Empfangsport der Funkfrequenzvorrichtung anzeigen.

5. Verfahren nach einem der Ansprüche 1 bis 4, wobei:
der Source-Route-Testrahmen die Portinformationen der Basisbandvorrichtung umfasst, und die Portinformationen der Basisbandvorrichtung den Zielport der Basisbandvorrichtung anzeigen.

6. Basisbandvorrichtung, umfassend:
ein erstes Sendemodul (610), das konfiguriert ist, um einen Source-Route-Testrahmen zu einer ersten Transportnetzwerkvorrichtung in einem Transportnetzwerk zu senden, wobei der Source-Route-Testrahmen unter Verwendung des Transportnetzwerks zu einer Funkfrequenzvorrichtung gesendet wird;
ein erstes Empfangsmodul (620), das konfiguriert ist, um einen Destination-Route-Testrahmen zu empfangen, der von der ersten Transportnetzwerkvorrichtung gesendet wird, wobei der Destination-Route-Testrahmen gebildet wird, nachdem die erste Transportnetzwerkvorrichtung erste Portinformationen in dem Source-Route-Testrahmen festhält und eine zweite Transportnetzwerkvorrichtung in dem Transportnetzwerk zweite Portinformationen in dem Source-Route-Testrahmen festhält, die ersten Portinformationen einen Eingangsport (4, 3) anzeigen, der zu der ersten Transportnetzwerkvorrichtung gehört und der mit einem Zielport (5, 8) der Basisbandvorrichtung verbunden ist, und die zweiten Portinformationen einen Ausgangsport (7, 5) anzeigen, der zu der zweiten Transportnetzwerkvorrichtung gehört und der mit einem Empfangsport (0, 1) der Funkfrequenzvorrichtung verbunden ist;
ein Bestimmungsmodul (630), das zum Bestimmen von Testinformationen gemäß dem Destination-Route-Testrahmen konfiguriert ist, wobei die Testinformationen anzeigen, dass der Zielport (5, 8) der Basisbandvorrichtung mit dem Eingangsport (4, 3) der ersten Transportnetzwerkvorrichtung verbunden ist, und
dass der Ausgangsport (7, 5) der zweiten Transportnetzwerkvorrichtung mit dem Empfangsport (0, 1) der Funkfrequenzvorrichtung verbunden ist; und
ein zweites Sendemodul (640), das konfiguriert ist, um die Testinformationen zu einem Elementverwaltungssystem, EMS, zu senden.

7. Basisbandvorrichtung nach Anspruch 6, wobei:
die ersten Portinformationen mindestens eines von einer Vorrichtungskennung der ersten Transportnetzwerkvorrichtung, einem Vorrichtungstyp, einer Nummer eines Baugruppenträgers, in dem sich der Eingangsport befindet, einer Nummer eines Gehäuses, in dem sich der Eingangsport befindet, einer Nummer eines Steckplatzes, in dem sich der Eingangsport befindet, einer Portnummer des Eingangsports, oder einem Arbeitsstatus der ersten Transportnetzwerkvorrichtung umfassen; und
die zweiten Portinformationen mindestens eines von einer Vorrichtungskennung der zweiten Transportnetzwerkvorrichtung, einem Vorrichtungstyp, einer Nummer eines Baugruppenträgers, in dem sich der Ausgangsport befindet, einer Nummer eines Gehäuses, in dem sich der Ausgangsport befindet, einer Nummer eines Steckplatzes, in dem sich der Ausgangsport befindet, einer Portnummer des Ausgangsports, oder einem Arbeitsstatus der zweiten Transportnetzwerkvorrichtung umfassen.

8. Basisbandvorrichtung nach Anspruch 6 oder 7, wobei:
die Testinformationen Portinformationen der Basisbandvorrichtung umfassen, wobei die ersten Portinformationen, und die zweiten Portinformationen, und die Portinformationen der Basisbandvorrichtung den Zielport der Basisbandvorrichtung anzeigen.

9. Basisbandvorrichtung nach Anspruch 8, wobei:
die Testinformationen Portinformationen der Funkfrequenzvorrichtung umfassen, und die Portinformationen der Funkfrequenzvorrichtung den Empfangsport der Funkfrequenzvorrichtung anzeigen.

10. Basisbandvorrichtung nach einem der Ansprüche 6 bis 9, wobei:
der Source-Route-Testrahmen die Portinformationen der Basisbandvorrichtung umfasst, und die Portinformationen der Basisbandvorrichtung den Zielport der Basisbandvorrichtung anzeigen.

11. Erste Transportnetzwerkvorrichtung in einem Transportnetzwerk, umfassend:
ein erstes Empfangsmodul (710), das konfiguriert ist, um einen Source-Route-Testrahmen zu empfangen, der von einer Basisbandvorrichtung gesendet wird, wobei der Source-Route-Testrahmen unter Verwendung des Transportnetzwerks zu einer Funkfrequenzvorrichtung gesendet wird;
ein Verarbeitungsmodul (720), das konfiguriert ist, um erste Portinformationen in dem Source-Route-Testrahmen festzuhalten, um einen ersten Route-Testrahmen zu erhalten, wobei die ersten Portinformationen einen Eingangsport (4, 3) anzeigen, der zu der ersten Transportnetzwerkvorrichtung gehört und der mit einem Zielport (5, 8) der Basisbandvorrichtung verbunden ist;
ein erstes Sendemodul (730), das konfiguriert ist, um den ersten Route-Testrahmen zu einer zweiten Transportnetzwerkvorrichtung in dem Transportnetzwerk zu senden;
ein zweites Empfangsmodul (740), das konfiguriert ist, um einen Destination-Route-Testrahmen zu empfangen, der von der zweiten Transportnetzwerkvorrichtung gesendet wird, wobei der Destination-Route-Testrahmen gebildet wird, nachdem die zweite Transportnetzwerkvorrichtung zweite Portinformationen in dem ersten Route-Testrahmen festhält, der Destination-Route-Testrahmen die ersten Portinformationen und die zweiten Portinformationen enthält und die zweiten Portinformationen einen Ausgangsport (7, 5) anzeigen, der zu der zweiten Transportnetzwerkvorrichtung gehört und der mit einem Empfangsport (0, 1) der Funkfrequenzvorrichtung verbunden ist; und
ein zweites Sendemodul (750), das konfiguriert ist, um den Destination-Route-Testrahmen zu der Basisbandvorrichtung zu senden.

12. Erste Transportnetzwerkvorrichtung nach Anspruch 11, wobei:
die ersten Portinformationen mindestens eines von einer Vorrichtungskennung der ersten Transportnetzwerkvorrichtung, einem Vorrichtungstyp, einer Nummer eines Baugruppenträgers, in dem sich der Eingangsport befindet, einer Nummer eines Gehäuses, in dem sich der Eingangsport befindet, einer Nummer eines Steckplatzes, in dem sich der Eingangsport befindet, einer Portnummer des Eingangsports, oder einem Arbeitsstatus der ersten Transportnetzwerkvorrichtung umfassen; und
die zweiten Portinformationen mindestens eines von einer Vorrichtungskennung der zweiten Transportnetzwerkvorrichtung, einem Vorrichtungstyp, einer Nummer eines Baugruppenträgers, in dem sich der Ausgangsport befindet, einer Nummer eines Gehäuses, in dem sich der Ausgangsport befindet, einer Nummer eines Steckplatzes, in dem sich der Ausgangsport befindet, einer Portnummer des Ausgangsports, oder einem Arbeitsstatus der zweiten Transportnetzwerkvorrichtung umfassen.

13. Erste Transportnetzwerkvorrichtung nach Anspruch 11 oder 12, wobei:
der Source-Route-Testrahmen Portinformationen der Basisbandvorrichtung umfasst, und die Portinformationen der Basisbandvorrichtung den Zielport der Basisbandvorrichtung anzeigen.

14. Erste Transportnetzwerkvorrichtung nach Anspruch 13, wobei:
der Source-Route-Testrahmen ferner Portinformationen der Funkfrequenzvorrichtung umfasst, und die Portinformationen der Funkfrequenzvorrichtung den Empfangsport der Funkfrequenzvorrichtung anzeigen.

15. Erste Transportnetzwerkvorrichtung nach einem der Ansprüche 11 bis 13, wobei:
der Destination-Route-Testrahmen Portinformationen der Funkfrequenzvorrichtung enthält, und die Portinformationen der Funkfrequenzvorrichtung den Empfangsport der Funkfrequenzvorrichtung anzeigen.

## Revendications

1. Procédé d'exploration d'une topologie fronthaul, comprenant :
l'envoi (110), par un dispositif de bande de base, d'une trame d'exploration d'itinéraire d'origine à un premier dispositif de réseau de transport dans un réseau de transport, dans lequel la trame d'exploration d'itinéraire d'origine est envoyée à un dispositif radiofréquence en utilisant le réseau de transport ;
la réception (120), par le dispositif de bande de base, d'une trame d'exploration d'itinéraire de destination envoyée par le premier dispositif de réseau de transport, dans lequel la trame d'exploration d'itinéraire de destination est formée après que le premier dispositif de réseau de transport a enregistré des premières informations de port dans la trame d'exploration d'itinéraire d'origine et qu'un second dispositif de réseau de transport dans le réseau de transport a enregistré des secondes informations de port dans la trame d'exploration d'itinéraire d'origine, les premières informations de port indiquent un port d'entrée (4, 3) qui est du premier dispositif de réseau de transport et qui est connecté à un port cible (5, 8) du dispositif de bande de base, et les secondes informations de port indiquent un port de sortie (7, 5) qui est du second dispositif de réseau de transport et qui est connecté à un port de réception (0, 1) du dispositif radiofréquence ;
la détermination (130), par le dispositif de bande de base, d'informations d'exploration selon la trame d'exploration d'itinéraire de destination, dans lequel les informations d'exploration indiquent que le port cible (5, 8) du dispositif de bande de base est connecté au port d'entrée (4, 3) du premier dispositif de réseau de transport, et que le port de sortie (7, 5) du second dispositif de réseau de transport est connecté au port de réception (0, 1) du dispositif radiofréquence ; et
l'envoi (140), par le dispositif de bande de base, des informations d'exploration à un système de gestion d'éléments, EMS.

2. Procédé selon la revendication 1, dans lequel :
les premières informations de port comprennent au moins l'un d'un identifiant de dispositif du premier dispositif de réseau de transport, d'un type de dispositif, d'un numéro d'un casier dans lequel le port d'entrée est situé, d'un numéro d'une armoire dans laquelle le port d'entrée est situé, d'un numéro d'une encoche dans laquelle le port d'entrée est situé, d'un numéro de port du port d'entrée, ou d'un état de fonctionnement du premier dispositif de réseau de transport ; et
les secondes informations de port comprennent au moins l'un d'un identifiant de dispositif du second dispositif de réseau de transport, d'un type de dispositif, d'un numéro d'un casier dans lequel le port de sortie est situé, d'un numéro d'une armoire dans laquelle le port de sortie est situé, d'un numéro d'une encoche dans laquelle le port de sortie est situé, d'un numéro de port du port de sortie, ou d'un état de fonctionnement du second dispositif de réseau de transport.

3. Procédé selon la revendication 1 ou 2, dans lequel :
les informations d'exploration comprennent des informations de port du dispositif de bande de base, les premières informations de port, et les secondes informations de port, et les informations de port du dispositif de bande de base indiquent le port cible du dispositif de bande de base.

4. Procédé selon la revendication 3, dans lequel :
les informations d'exploration comprennent des informations de port du dispositif radiofréquence, et les informations de port du dispositif radiofréquence indiquent le port de réception du dispositif radiofréquence.

5. Procédé selon l'une quelconque des revendications 1 à 4, dans lequel :
la trame d'exploration d'itinéraire d'origine comprend les informations de port du dispositif de bande de base, et les informations de port du dispositif de bande de base indiquent le port cible du dispositif de bande de base.

6. Dispositif de bande de base, comprenant :
un premier module d'envoi (610), configuré pour envoyer une trame d'exploration d'itinéraire d'origine à un premier dispositif de réseau de transport dans un réseau de transport, dans lequel la trame d'exploration d'itinéraire d'origine est envoyée à un dispositif radiofréquence en utilisant le réseau de transport ;
un premier module de réception (620), configuré pour recevoir une trame d'exploration d'itinéraire de destination envoyée par le premier dispositif de réseau de transport, dans lequel la trame d'exploration d'itinéraire de destination est formée après que le premier dispositif de réseau de transport a enregistré des premières informations de port dans la trame d'exploration d'itinéraire d'origine et qu'un second dispositif de réseau de transport dans le réseau de transport a enregistré des secondes informations de port dans la trame d'exploration d'itinéraire d'origine, les premières informations de port indiquent un port d'entrée (4, 3) qui est du premier dispositif de réseau de transport et qui est connecté à un port cible (5, 8) du dispositif de bande de base, et les secondes informations de port indiquent un port de sortie (7, 5) qui est du second dispositif de réseau de transport et qui est connecté à un port de réception (0, 1) du dispositif radiofréquence ;
un module de détermination (630), configuré pour déterminer des informations d'exploration selon la trame d'exploration d'itinéraire de destination, dans lequel les informations d'exploration indiquent que le port cible (5, 8) du dispositif de bande de base est connecté au port d'entrée (4, 3) du premier dispositif de réseau de transport, et que le port de sortie (7, 5) du second dispositif de réseau de transport est connecté au port de réception (0, 1) du dispositif radiofréquence ; et
un second module d'envoi (640), configuré pour envoyer les informations d'exploration à un système de gestion d'éléments, EMS.

7. Dispositif de bande de base selon la revendication 6, dans lequel :
les premières informations de port comprennent au moins l'un d'un identifiant de dispositif du premier dispositif de réseau de transport, d'un type de dispositif, d'un numéro d'un casier dans lequel le port d'entrée est situé, d'un numéro d'une armoire dans laquelle le port d'entrée est situé, d'un numéro d'une encoche dans laquelle le port d'entrée est situé, d'un numéro de port du port d'entrée, ou d'un état de fonctionnement du premier dispositif de réseau de transport ; et
les secondes informations de port comprennent au moins l'un d'un identifiant de dispositif du second dispositif de réseau de transport, d'un type de dispositif, d'un numéro d'un casier dans lequel le port de sortie est situé, d'un numéro d'une armoire dans laquelle le port de sortie est situé, d'un numéro d'une encoche dans laquelle le port de sortie est situé, d'un numéro de port du port de sortie, ou d'un état de fonctionnement du second dispositif de réseau de transport.

8. Dispositif de bande de base selon la revendication 6 ou 7, dans lequel :
les informations d'exploration comprennent des informations de port du dispositif de bande de base, les premières informations de port, et les secondes informations de port, et les informations de port du dispositif de bande de base indiquent le port cible du dispositif de bande de base.

9. Dispositif de bande de base selon la revendication 8, dans lequel :
les informations d'exploration comprennent des informations de port du dispositif radiofréquence, et les informations de port du dispositif radiofréquence indiquent le port de réception du dispositif radiofréquence.

10. Dispositif de bande de base selon l'une quelconque des revendications 6 à 9, dans lequel :
la trame d'exploration d'itinéraire d'origine comprend les informations de port du dispositif de bande de base, et les informations de port du dispositif de bande de base indiquent le port cible du dispositif de bande de base.

11. Premier dispositif de réseau de transport dans un réseau de transport, comprenant :
un premier module de réception (710), configuré pour recevoir une trame d'exploration d'itinéraire d'origine envoyée par un dispositif de bande de base, dans lequel la trame d'exploration d'itinéraire d'origine est envoyée à un dispositif radiofréquence en utilisant le réseau de transport ;
un module de traitement (720), configuré pour enregistrer des premières informations de port dans la trame d'exploration d'itinéraire d'origine, pour obtenir une première trame d'exploration d'itinéraire, dans lequel les premières informations de port indiquent un port d'entrée (4, 3) qui est du premier dispositif de réseau de transport et qui est connecté à un port cible (5, 8) du dispositif de bande de base ;
un premier module d'envoi (730), configuré pour envoyer la première trame d'exploration d'itinéraire à un second dispositif de réseau de transport dans le réseau de transport ;
un second module de réception (740), configuré pour recevoir une trame d'exploration d'itinéraire de destination envoyée par le second dispositif de réseau de transport, dans lequel la trame d'exploration d'itinéraire de destination est formée après que le second dispositif de réseau de transport a enregistré des secondes informations de port dans la première trame d'exploration d'itinéraire, la trame d'exploration d'itinéraire de destination porte les premières informations de port et les secondes informations de port, et les secondes informations de port indiquent un port de sortie (7, 5) qui est du second dispositif de réseau de transport et qui est connecté à un port de réception (0, 1) du dispositif radiofréquence ; et
un second module d'envoi (750), configuré pour envoyer la trame d'exploration d'itinéraire de destination au dispositif de bande de base.

12. Premier dispositif de réseau de transport selon la revendication 11, dans lequel :
les premières informations de port comprennent au moins l'un d'un identifiant de dispositif du premier dispositif de réseau de transport, d'un type de dispositif, d'un numéro d'un casier dans lequel le port d'entrée est situé, d'un numéro d'une armoire dans laquelle le port d'entrée est situé, d'un numéro d'une encoche dans laquelle le port d'entrée est situé, d'un numéro de port du port d'entrée, ou d'un état de fonctionnement du premier dispositif de réseau de transport ; et
les secondes informations de port comprennent au moins l'un d'un identifiant de dispositif du second dispositif de réseau de transport, d'un type de dispositif, d'un numéro d'un casier dans lequel le port de sortie est situé, d'un numéro d'une armoire dans laquelle le port de sortie est situé, d'un numéro d'une encoche dans laquelle le port de sortie est situé, d'un numéro de port du port de sortie, ou d'un état de fonctionnement du second dispositif de réseau de transport.

13. Premier dispositif de réseau de transport selon la revendication 11 ou 12, dans lequel :
la trame d'exploration d'itinéraire d'origine comprend des informations de port du dispositif de bande de base, et les informations de port du dispositif de bande de base indiquent le port cible du dispositif de bande de base.

14. Premier dispositif de réseau de transport selon la revendication 13, dans lequel :
la trame d'exploration d'itinéraire d'origine comprend en outre des informations de port du dispositif radiofréquence, et les informations de port du dispositif radiofréquence indiquent le port de réception du dispositif radiofréquence.

15. Premier dispositif de réseau de transport selon l'une quelconque des revendications 11 à 13, dans lequel :
la trame d'exploration d'itinéraire de destination porte des informations de port du dispositif radiofréquence, et les informations de port du dispositif radiofréquence indiquent le port de réception du dispositif radiofréquence.
